# EUROPEAN PATENT APPLICATION

(11) **EP 4 576 874 A1**
(43) Date of publication of application: **25.06.2025**
(21) Application number: 23864674.9
(22) Date of filing: 12.09.2023
(51) Int. Cl.: H04W 36/00

(54) **CELL HANDOVER METHOD AND COMMUNICATION APPARATUS**

(30) Priority: 13.09.2022 CN 202211110053
(71) Applicant: Huawei Technologies Co., Ltd., Shenzhen, Guangdong 518129 (CN)
(72) Inventor: GU, Zhifang, Shenzhen, Guangdong 518129 (CN); FAN, Qiang, Shenzhen, Guangdong 518129 (CN); YOU, Chunhua, Shenzhen, Guangdong 518129 (CN)
(74) Representative: Epping - Hermann - Fischer
(86) International application number: PCT/CN2023/118134
(87) International publication number: WO 2024/055942

(57) **Abstract**

This application discloses a cell switching method and a communication apparatus. The method includes: receiving a switch command from a first DU, where the switch command instructs a terminal device to switch to a target cell and to communicate with the target cell in a first beam direction; and sending, according to the switch command, an uplink message to a second DU that manages the target cell or the target cell on a second time-frequency resource corresponding to a second beam direction, where a periodicity of a time-frequency resource corresponding to the second beam direction is shorter than a periodicity of a time-frequency resource corresponding to the first beam direction. Because the periodicity of the time-frequency resource corresponding to the second beam direction is shorter than the periodicity of the time-frequency resource corresponding to the first beam direction, the uplink message is sent to the second DU or the target cell on the second time-frequency resource corresponding to the second beam direction, so that the uplink message can be sent earlier (in other words, waiting duration for sending the uplink message is reduced), to accelerate a process in which the terminal device accesses the target cell, in other words, reduce interruption duration caused by the cell switching.

## Description

This application claims priority to Chinese Patent Application No. 202211110053.X, filed with the China National Intellectual Property Administration on September 13, 2022 and entitled "CELL SWITCHING METHOD AND COMMUNICATION APPARATUS", which is incorporated herein by reference in its entirety.

### TECHNICAL FIELD

This application relates to the communication field, and in particular, to a cell switching method and a communication apparatus.

### BACKGROUND

In a mobile communication system, when a location of a terminal device is changed, a communication link between the terminal device and a network device is changed. The network device indicates, based on a movement status of the terminal device, the terminal device to perform cell switching.

In a process in which the terminal device switches from a source cell to a target cell, interruption duration may be caused, affecting user experience. How to reduce the interruption duration caused by the cell switching is worth studying.

### SUMMARY

Embodiments of this application disclose a cell switching method and a communication apparatus, to reduce interruption duration caused by cell switching.

According to a first aspect, an embodiment of this application provides a cell switching method. The method is applied to a terminal device, and the method includes: receiving a switch command from a first distributed unit (distributed unit, DU), where the switch command instructs the terminal device to switch to a target cell and to communicate with the target cell in a first beam direction; and sending, according to the switch command, an uplink message to a second DU that manages the target cell or the target cell on a second time-frequency resource corresponding to a second beam direction, where a periodicity of a time-frequency resource corresponding to the second beam direction is shorter than a periodicity of a time-frequency resource corresponding to the first beam direction.

In this embodiment of this application, the terminal device sends, according to the switch command, the uplink message to the second DU that manages the target cell or the target cell on the second time-frequency resource corresponding to the second beam direction. Because the periodicity of the time-frequency resource corresponding to the second beam direction is shorter than the periodicity of the time-frequency resource corresponding to the first beam direction, the uplink message is sent, on the second time-frequency resource corresponding to the second beam direction, to the second DU that manages the target cell or the target cell, so that the uplink message can be sent earlier (in other words, waiting duration for sending the uplink message is reduced), to accelerate a process in which the terminal device accesses the target cell.

In a possible implementation, the second time-frequency resource is a time-frequency resource corresponding to a first uplink grant corresponding to the second beam direction, and the first uplink grant is one of a plurality of periodic uplink grants of the target cell.

Because the periodicity of the time-frequency resource corresponding to the second beam direction is shorter than the periodicity of the time-frequency resource corresponding to the first beam direction, the uplink message can be sent earlier on the time-frequency resource corresponding to the second beam direction than on the time-frequency resource corresponding to the first beam direction.

In a possible implementation, the second time-frequency resource is a physical uplink control channel (physical uplink control channel, PUCCH) resource corresponding to the second beam direction, and the PUCCH resource corresponding to the second beam direction is one of a plurality of periodic PUCCH resources of the target cell.

Because the periodicity of the time-frequency resource corresponding to the second beam direction is shorter than the periodicity of the time-frequency resource corresponding to the first beam direction, the uplink message can be sent earlier on the PUCCH resource corresponding to the second beam direction than on the PUCCH resource corresponding to the first beam direction.

In a possible implementation, the uplink message includes first indication information, and the first indication information indicates that the first beam direction is to be used for communication with the terminal device.

In this implementation, the first indication information indicates the target cell to communicate with the terminal device in the first beam direction, so that the target cell can communicate with the terminal device in a preferred beam direction.

In a possible implementation, the sending, according to the switch command, an uplink message to a second DU that manages the target cell or the target cell on a second time-frequency resource corresponding to a second beam direction includes: triggering a scheduling request process when the terminal device has no uplink grant used to send identity information of the terminal device; and sending, according to the switch command, a scheduling request to the second DU that manages the target cell or the target cell on the second time-frequency resource, where the scheduling request is used to request an uplink grant, and the scheduling request is included in the uplink message.

In this implementation, the scheduling request is sent, on the second time-frequency resource, to the second DU that manages the target cell or the target cell, so that the uplink grant can be quickly obtained. In this way, the identity information of the terminal device is sent by using the obtained uplink grant.

In a possible implementation, the sending, according to the switch command, a scheduling request to the second DU that manages the target cell or the target cell on the second time-frequency resource includes: when no uplink grant from the second DU is received within preset duration after the switch command is received, sending, on the second time-frequency resource, the scheduling request to the second DU that manages the target cell or the target cell. Optionally, if the uplink grant from the second DU is received within the preset duration after the switch command is received, the uplink message is sent, by using the received uplink grant, to the second DU that manages the target cell or the target cell. The uplink message may include the identity information of the terminal device. It should be understood that if the uplink grant from the second DU is received within the preset duration after the switch command is received, the scheduling request does not need to be sent. In this way, sending of the scheduling request can be reduced.

In a possible implementation, that no uplink grant from the second DU is received within preset duration after the switch command is received includes: no uplink grant from the second DU is received before a timer expires, where a start time point of the timer is a time point at which the scheduling request process is triggered.

In this implementation, whether to send the scheduling request is determined depending on whether the uplink grant from the second DU is received before the timer expires, so that sending of the scheduling request can be reduced, and signaling overheads can be reduced.

In a possible implementation, after the sending, on the second time-frequency resource, the scheduling request to the second DU that manages the target cell or the target cell, the method further includes: receiving grant information that is sent by the second DU for the scheduling request, where the grant information indicates a second uplink grant available to the terminal device; and sending second indication information to the second DU or the target cell based on the second uplink grant, where the second indication information indicates that the first beam direction is to be used for communication with the terminal device.

In this implementation, the second indication information is sent to the second DU or the target cell based on the second uplink grant, so that use of the pre-configured PUCCH resources can be reduced.

In a possible implementation, the first beam direction corresponds to a channel state information reference signal (channel state information reference signal, CSI-RS), the second beam direction corresponds to a synchronization signal and physical broadcast channel block (synchronization signal and physical broadcast channel block, SSB), and the CSI-RS corresponding to the first beam direction is one of a plurality of CSI-RSs associated with the SSB corresponding to the second beam direction.

In this implementation, the first beam direction corresponds to the CSI-RS, the second beam direction corresponds to the SSB, and the uplink message is sent, on the second time-frequency resource corresponding to the second beam direction, to the second DU that manages the target cell or the target cell, so that the process in which the terminal device accesses the target cell can be accelerated.

In a possible implementation, the sending, according to the switch command, an uplink message to a second DU that manages the target cell or the target cell on a second time-frequency resource corresponding to a second beam direction includes: determining, according to the switch command, the second beam direction corresponding to the first beam direction; and sending the uplink message to the second DU that manages the target cell or the target cell on the second time-frequency resource corresponding to the second beam direction.

In this implementation, the second beam direction corresponding to the first beam direction is determined, and the uplink message is sent, on the second time-frequency resource corresponding to the second beam direction, to the second DU that manages the target cell or the target cell. The uplink message can be sent earlier, so that cell switching is accelerated.

In a possible implementation, the method further includes: receiving configuration information of a plurality of candidate cells from the first DU, where the configuration information of the plurality of candidate cells includes timing advance (timing advance, TA) information of one or more candidate cells; and obtaining TA information of the target cell based on the switch command and the configuration information of the plurality of candidate cells, where the target cell is included in the plurality of candidate cells; and the sending, according to the switch command, an uplink message to a second DU that manages the target cell or the target cell on a second time-frequency resource corresponding to a second beam direction includes: sending, based on the switch command and the TA information of the target cell, the uplink message to the second DU that manages the target cell or the target cell on the second time-frequency resource corresponding to the second beam direction.

In this implementation, the uplink message is sent, based on the switch command and the TA information of the target cell, to the second DU that manages the target cell or the target cell on the second time-frequency resource corresponding to the second beam direction, so that RACH-less cell switching is implemented, and switching interruption duration can be reduced.

In a possible implementation, the switch command includes TA information of the target cell; and the sending, according to the switch command, an uplink message to a second DU that manages the target cell or the target cell on a second time-frequency resource corresponding to a second beam direction includes: sending, based on the switch command and the TA information of the target cell, the uplink message to the second DU that manages the target cell or the target cell on the second time-frequency resource corresponding to the second beam direction.

In this implementation, the uplink message is sent, based on the switch command and the TA information of the target cell, to the second DU that manages the target cell or the target cell on the second time-frequency resource corresponding to the second beam direction, so that RACH-less cell switching is implemented, and switching interruption duration can be reduced.

In a possible implementation, before receiving a switch command from a first distributed unit DU, the method further includes: sending capability indication information to the first DU, where the capability indication information indicates a maximum quantity of transmission configuration indicator states that can be simultaneously activated by the terminal device; receiving second information from the first DU; activating a transmission configuration indicator state of one or more candidate cells based on the second information, where the one or more candidate cells include the target cell; and performing downlink synchronization tracking on a reference signal associated with the transmission configuration indicator state of the one or more candidate cells.

In this implementation, before receiving the switch command from the first DU, the terminal device activates the TCI state of the one or more candidate cells, and performs downlink synchronization tracking on the reference signal associated with the TCI state of the candidate cell, to complete a downlink synchronization process of the target cell more quickly, and complete the switching to the target cell.

**In** a possible implementation, the switch command includes a first reference signal identifier, and the method further includes: after the terminal device switches to the target cell, communicating with the target cell in the first beam direction corresponding to the first reference signal identifier.

**In** this implementation, the communication with the target cell is performed in the first beam direction corresponding to the first reference signal identifier, so that the communication with the target cell can be performed in a preferred direction.

According to a second aspect, an embodiment of this application provides another cell switching method. The method is applied to a second DU, and the method includes: receiving an uplink message sent by a terminal device on a second time-frequency resource corresponding to a second beam direction, where the uplink message indicates that the terminal device is accessing a target cell managed by the second DU, a periodicity of a time-frequency resource corresponding to the second beam direction is shorter than a periodicity of a time-frequency resource corresponding to a first beam direction, and the first beam direction is a beam direction that is to be used when the terminal device communicates with the target cell; and enabling, based on the uplink message, the terminal device to access the target cell.

The periodicity of the time-frequency resource corresponding to the second beam direction is shorter than the periodicity of the time-frequency resource corresponding to the first beam direction. Therefore, the uplink message sent by the terminal device on the second time-frequency resource corresponding to the second beam direction can be received more quickly, in other words, a process in which the terminal device accesses the target cell is accelerated.

**In** a possible implementation, the second time-frequency resource is a time-frequency resource corresponding to a first uplink grant corresponding to the second beam direction, and the first uplink grant is one of a plurality of periodic uplink grants of the target cell.

The periodicity of the time-frequency resource corresponding to the second beam direction is shorter than the periodicity of the time-frequency resource corresponding to the first beam direction. Therefore, there is a high probability that the uplink message sent by the terminal device on the second time-frequency resource corresponding to the second beam direction can be received earlier.

**In** a possible implementation, the second time-frequency resource is a PUCCH resource corresponding to the second beam direction, and the PUCCH resource corresponding to the second beam direction is one of a plurality of periodic PUCCH resources of the target cell.

The periodicity of the time-frequency resource corresponding to the second beam direction is shorter than the periodicity of the time-frequency resource corresponding to the first beam direction. Therefore, there is a high probability that the uplink message sent by the terminal device on the PUCCH resource corresponding to the second beam direction can be received earlier.

**In** a possible implementation, the uplink message includes first indication information, and the first indication information indicates that the first beam direction is to be used for communication with the terminal device.

**In** this implementation, the first indication information indicates the target cell to communicate with the terminal device in the first beam direction, so that the beam direction that needs to be used for communication with the terminal device can be determined.

In a possible implementation, the uplink message includes a scheduling request and the first indication information, the first indication information indicates that the first beam direction is to be used for communication with the terminal device, and the scheduling request is used to request an uplink grant.

In this implementation, the uplink message includes the scheduling request and the first indication information, so that the uplink grant can be provided to the terminal device based on the uplink message, and it can be learned that the communication with the terminal device is performed in the first beam direction.

In a possible implementation, the uplink message includes a scheduling request, and the scheduling request is used to request an uplink grant; and the method further includes: sending grant information for the scheduling request to the terminal device, where the grant information indicates a second uplink grant available to the terminal device; and receiving second indication information that is sent by the terminal device by using the second uplink grant, where the second indication information indicates the first beam direction.

In this implementation, the grant information for the scheduling request is sent to the terminal device, so that the terminal device can obtain the uplink grant. The second indication information sent by the terminal device by using the second uplink grant is received, so that the beam direction that needs to be used for communication with the terminal device can be determined.

In a possible implementation, before the enabling, based on the uplink message, the terminal device to access the target cell, the method further includes: receiving third indication information from a central unit (central unit, CU), where the third indication information indicates the terminal device to access the target cell in the first beam direction.

In this implementation, by using the third indication information, it can be learned in a timely manner that the terminal device accesses the target cell in the first beam direction.

In a possible implementation, the first beam direction corresponds to a CSI-RS, the second beam direction corresponds to an SSB, and the CSI-RS corresponding to the first beam direction is one of a plurality of CSI-RSs associated with the SSB corresponding to the second beam direction.

In this implementation, the first beam direction corresponds to the CSI-RS, the second beam direction corresponds to the SSB, and the uplink message sent by the terminal device on the second time-frequency resource corresponding to the second beam direction can be received more quickly.

According to a third aspect, an embodiment of this application provides another cell switching method. The method includes: A CU sends, to a second DU, a request message used to request candidate cell information of a terminal device; the CU receives a first message from the second DU, where the first message includes information about K candidate cells of the terminal device, the information about the K candidate cells includes TA information of the K candidate cells or correspondences between CSI-RSs and transmission configuration indicator states of the K candidate cells, and K is an integer greater than 0; and the CU sends the information about the K candidate cells to a first DU, where the first DU is a DU currently serving the terminal device.

In this embodiment of this application, the CU sends the information about the K candidate cells to the first DU, so that the first DU can obtain the information about the K candidate cells.

In a possible implementation, the request message indicates that a reason why the CU sends the request message is obtaining the TA information of the candidate cell.

In this implementation, the request message is sent to the second DU, to obtain the TA information of the candidate cell.

In a possible implementation, the method further includes: When the information about the K candidate cells includes the TA information of the K candidate cells, the first DU sends the TA information of the K candidate cells to the terminal device.

In this implementation, the first DU sends the TA information of the K candidate cells to the terminal device, so that the terminal device can obtain the information about the K candidate cells.

In a possible implementation, the method further includes: When the information about the K candidate cells includes the TA information of the K candidate cells, the first DU includes TA information of a target cell in a switch command to be sent to the terminal device, where the target cell is included in the K candidate cells, and the switch command instructs the terminal device to switch to the target cell.

In this implementation, the first DU includes the TAinformation of the target cell in the switch command to be sent to the terminal device, so that the terminal device can obtain the TA information of the target cell earlier.

In a possible implementation, the method further includes: The first DU determines, based on measurement results of a plurality of CSI-RSs from the terminal device, to switch the terminal device to the target cell, and that the terminal device communicates with the target cell in a beam direction corresponding to a first CSI-RS, where the first CSI-RS is included in the plurality of CSI-RSs, and the target cell is included in the K candidate cells. When the information about the K candidate cells includes the correspondences between the CSI-RSs of the K candidate cells and the transmission configuration indicator states, the first DU determines, based on the correspondences, a first transmission configuration indicator state corresponding to the first CSI-RS. The first DU sends the switch command to the terminal device, where the switch command instructs the terminal device to switch to the target cell and to communicate with the target cell in the beam direction corresponding to the first transmission configuration indicator state.

In this implementation, the first DU determines, based on the correspondences, the first transmission configuration indicator state corresponding to the first CSI-RS, and sends, to the terminal device, the switch command instructing the terminal device to switch to the target cell and to communicate with the target cell in the beam direction corresponding to the first transmission configuration indicator state, so that the terminal device communicates with the target cell in the beam direction corresponding to the first transmission configuration indicator state.

According to a fourth aspect, an embodiment of this application provides another cell switching method. The method includes: A CU receives a first switch decision result from a first DU, where the first switch decision result notifies a second DU that a terminal device is to switch to a target cell managed by the second DU, and notifies the second DU of a first beam direction that is to be used when the target cell communicates with the terminal device, and the first DU is a DU currently serving the terminal device. The CU sends a second switch decision result to the second DU based on the first switch decision result, where the second switch decision result indicates that the terminal device is to switch to the target cell and indicate the first beam direction that is to be used when the target cell communicates with the terminal device.

In this embodiment of this application, the CU sends the second switch decision result to the second DU based on the first switch decision result, so that the second DU can actively schedule the terminal device based on the second switch decision result. In this way, the terminal device can access the target cell more quickly.

In a possible implementation, the first switch decision result includes first indication information, and the first indication information indicates a transmission configuration indicator state, with a first number, of the target cell. That the CU sends a second switch decision result to the second DU based on the first switch decision result includes: The CU numbers, based on the first indication information, the transmission configuration indicator state, with the first number, of the target cell to a transmission configuration indicator state, with a second number, of the target cell, where a beam direction corresponding to the transmission configuration indicator state number, with the second number, of the target cell is the first beam direction, and the first number is different from the second number. The CU sends the second switch decision result to the second DU, where the second switch decision result includes second indication information, and the second indication information indicates the transmission configuration indicator state, with the second number, of the target cell. For the second DU, the beam direction corresponding to the transmission configuration indicator state, with the second number, of the target cell is the first beam direction. For the terminal device and the first DU, the beam direction corresponding to the transmission configuration indicator state, with the second number, of the target cell is the first beam direction.

In this implementation, the CU sends the second switch decision result to the second DU, so that the second DU determines, based on the second switch decision result, the first beam direction to be used during the communication with the terminal device.

In a possible implementation, before that the CU numbers, based on the first indication information, the transmission configuration indicator state, with the first number, of the target cell to a transmission configuration indicator state, with a second number, of the target cell, the method further includes: The CU numbers the transmission configuration indicator state number, with the second number, of the target cell to the transmission configuration indicator state with the first number, and configures the transmission configuration indicator state, with the first number, of the target cell in a configuration of a serving cell currently accessed by the terminal device.

In this configuration manner, before the switching, the terminal device does not need to read or apply configuration information of a candidate cell, and may perform reference signal measurement on the candidate cell only by using a configuration of a source cell, and receive a beam direction, of the candidate cell or the target cell, that is indicated by the first DU and that needs to be used after the switching.

According to a fifth aspect, an embodiment of this application provides another cell switching method. The method includes: A first DU determines, based on measurement results of a plurality of CSI-RSs from a terminal device, to switch the terminal device to a target cell managed by a second DU, and determines that the terminal device communicates with the target cell in a first beam direction. The first DU sends a first switch decision result to a CU, where the first switch decision result notifies the second DU that the terminal device is to switch to the target cell, and notifies the second DU of the first beam direction that is to be used when the target cell communicates with the terminal device.

In this embodiment of this application, the first DU sends the first switch decision result to the CU, to notify the second DU that the terminal device is to switch to the target cell, and notify the second DU of the first beam direction that is to be used when the target cell communicates with the terminal device. In this way, the second DU can actively schedule the terminal device, so that the terminal device can access the target cell more quickly.

In a possible implementation, the method further includes: The first DU configures a transmission configuration indicator state, with a first number, of the target cell in a configuration of a serving cell currently accessed by the terminal device. That the first DU sends a first switch decision result to a CU includes: The first DU sends the first switch decision result to the CU based on the configuration of the transmission configuration indicator state of the target cell in the serving cell, where the first switch decision result includes first indication information, and the first indication information indicates the transmission configuration indicator state, with the first number, of the target cell.

In this embodiment of this application, the first DU sends the first switch decision result to the CU based on the configuration of the transmission configuration indicator state of the target cell in the serving cell, so that the CU notifies the second DU that the terminal device is to switch to the target cell and notifies the second DU of the first beam direction that is to be used when the target cell communicates with the terminal device.

According to a sixth aspect, an embodiment of this application provides a communication apparatus. The communication apparatus has a function of implementing behavior in the method embodiment in the first aspect. The communication apparatus (a terminal device) may be a communication device, may be a component (for example, a processor, a chip, or a chip system) of the communication device, or may be a logic module or software that can implement all or some functions of the communication device. The function of the communication apparatus may be implemented by using hardware, or may be implemented by hardware executing corresponding software. The hardware or the software includes one or more modules or units corresponding to the function. In a possible implementation, the communication apparatus includes a processing module and a transceiver module. The transceiver module is configured to receive a switch command from a first DU, where the switch command instructs the terminal device to switch to a target cell and to communicate with the target cell in a first beam direction. The processing module is configured to send, through the transceiver module according to the switch command, an uplink message to a second DU that manages the target cell or the target cell on a second time-frequency resource corresponding to a second beam direction, where a periodicity of a time-frequency resource corresponding to the second beam direction is shorter than a periodicity of a time-frequency resource corresponding to the first beam direction.

In a possible implementation, the processing module is specifically configured to: trigger a scheduling request process when the terminal device has no uplink grant used to send identity information of the terminal device; and send, through the transceiver module according to the switch command, a scheduling request to the second DU that manages the target cell or the target cell on the second time-frequency resource, where the scheduling request is used to request an uplink grant, and the scheduling request is included in the uplink message.

In a possible implementation, the processing module is specifically configured to: when no uplink grant from the second DU is received within preset duration after the switch command is received, send, through the transceiver module on the second time-frequency resource, the scheduling request to the second DU that manages the target cell or the target cell.

In a possible implementation, the processing module is specifically configured to: determine, according to the switch command, the second beam direction corresponding to the first beam direction; and send, through the transceiver module, the uplink message to the second DU that manages the target cell or to the target cell on the second time-frequency resource corresponding to the second beam direction.

In a possible implementation, the transceiver module is further configured to receive grant information that is sent by the second DU for the scheduling request, where the grant information indicates a second uplink grant available to the terminal device; and the processing module is further configured to send second indication information to the second DU or the target cell through the transceiver module based on the second uplink grant, where the second indication information indicates that the first beam direction is to be used for communication with the terminal device.

In a possible implementation, the transceiver module is further configured to receive configuration information of a plurality of candidate cells from the first DU, where the configuration information of the plurality of candidate cells includes timing advance TA information of one or more candidate cells; the processing module is further configured to obtain TA information of the target cell based on the switch command and the configuration information of the plurality of candidate cells, where the target cell is included in the plurality of candidate cells; and the processing module is specifically configured to send, through the transceiver module based on the switch command and the TA information of the target cell, the uplink message to the second DU that manages the target cell or the target cell on the second time-frequency resource corresponding to the second beam direction.

**In** a possible implementation, the switch command includes TA information of the target cell; and the processing module is specifically configured to send, through the transceiver module based on the switch command and the TAinformation of the target cell, the uplink message to the second DU that manages the target cell or the target cell on the second time-frequency resource corresponding to the second beam direction.

In a possible implementation, the transceiver module is further configured to: send capability indication information to the first DU, where the capability indication information indicates a maximum quantity of transmission configuration indicator states that can be simultaneously activated by the terminal device; and receive second information from the first DU; and the processing module is further configured to: activate a transmission configuration indicator state of one or more candidate cells based on the second information, where the one or more candidate cells include the target cell; and perform downlink synchronization tracking on a reference signal associated with the transmission configuration indicator state of the one or more candidate cells.

In a possible implementation, the switch command includes a first reference signal identifier; and the processing module is further configured to: after the terminal device switches to the target cell, communicate with the target cell in the first beam direction corresponding to the first reference signal identifier.

For possible implementations of the communication apparatus in the sixth aspect, refer to the possible implementations of the first aspect.

For technical effects brought by the possible implementations of the sixth aspect, refer to descriptions of the technical effects of the first aspect or the possible implementations of the first aspect.

According to a seventh aspect, an embodiment of this application provides a communication apparatus. The communication apparatus has a function of implementing behavior in the method embodiment in the second aspect. The communication apparatus (a second DU) may be a communication device, may be a component (for example, a processor, a chip, or a chip system) of the communication device, or may be a logic module or software that can implement all or some functions of the communication device. The function of the communication apparatus may be implemented by using hardware, or may be implemented by hardware executing corresponding software. The hardware or the software includes one or more modules or units corresponding to the function. **In** a possible implementation, the communication apparatus includes a processing module and a transceiver module. The transceiver module is configured to receive an uplink message sent by a terminal device on a second time-frequency resource corresponding to a second beam direction, where the uplink message indicates that the terminal device is accessing a target cell managed by the second DU, a periodicity of a time-frequency resource corresponding to the second beam direction is shorter than a periodicity of a time-frequency resource corresponding to a first beam direction, and the first beam direction is a beam direction that is to be used when the terminal device communicates with the target cell. The processing module is configured to enable, based on the uplink message, the terminal device to access the target cell.

In a possible implementation, the uplink message includes a scheduling request, and the scheduling request is used to request an uplink grant; and the transceiver module is further configured to: send grant information for the scheduling request to the terminal device, where the grant information indicates a second uplink grant available to the terminal device; and receive second indication information that is sent by the terminal device by using the second uplink grant, where the second indication information indicates the first beam direction.

In a possible implementation, third indication information is received from a CU, where the third indication information indicates the terminal device to access the target cell in the first beam direction.

For possible implementations of the communication apparatus in the seventh aspect, refer to the possible implementations of the second aspect.

For technical effects brought by the possible implementations of the seventh aspect, refer to descriptions of the technical effects of the second aspect or the possible implementations of the second aspect.

According to an eighth aspect, an embodiment of this application provides a communication apparatus. The communication apparatus has a function of implementing behavior in the method embodiment in the third aspect. The communication apparatus (a CU) may be a communication device, may be a component (for example, a processor, a chip, or a chip system) of the communication device, or may be a logic module or software that can implement all or some functions of the communication device. The function of the communication apparatus may be implemented by using hardware, or may be implemented by hardware executing corresponding software. The hardware or the software includes one or more modules or units corresponding to the function. In a possible implementation, the communication apparatus includes a processing module and a transceiver module. The processing module is configured to generate a request message used to request candidate cell information of a terminal device. The transceiver module is configured to: send the request message to a second DU; receive a first message from the second DU, where the first message includes information about K candidate cells of the terminal device, the information about the K candidate cells includes TA information of the K candidate cells or correspondences between CSI-RSs and transmission configuration indicator states of the K candidate cells, and K is an integer greater than 0; and send the information about the K candidate cells to a first DU, where the first DU is a DU currently serving the terminal device.

For possible implementations of the communication apparatus in the eighth aspect, refer to the possible implementations of the third aspect.

For technical effects brought by the possible implementations of the eighth aspect, refer to descriptions of the technical effects of the third aspect or the possible implementations of the third aspect.

According to a ninth aspect, an embodiment of this application provides a communication apparatus. The communication apparatus has a function of implementing behavior in the method embodiment in the fourth aspect. The communication apparatus (a CU) may be a communication device, may be a component (for example, a processor, a chip, or a chip system) of the communication device, or may be a logic module or software that can implement all or some functions of the communication device. The function of the communication apparatus may be implemented by using hardware, or may be implemented by hardware executing corresponding software. The hardware or the software includes one or more modules or units corresponding to the function. In a possible implementation, the communication apparatus includes a processing module and a transceiver module. The transceiver module is configured to receive a first switch decision result from a first DU, where the first switch decision result notifies a second DU that a terminal device is to switch to a target cell managed by the second DU, and notifies the second DU of a first beam direction that is to be used when the target cell communicates with the terminal device, and the first DU is a DU currently serving the terminal device. The processing module is configured to send, through the transceiver module, a second switch decision result to the second DU based on the first switch decision result, where the second switch decision result indicates that the terminal device is to switch to the target cell and indicate the first beam direction that is to be used when the target cell communicates with the terminal device.

In a possible implementation, the first switch decision result includes first indication information, and the first indication information indicates a transmission configuration indicator state, with a first number, of the target cell. The processing module is specifically configured to: number, based on the first indication information, the transmission configuration indicator state, with the first number, of the target cell to a transmission configuration indicator state, with a second number, of the target cell, where a beam direction corresponding to the transmission configuration indicator state number, with the second number, of the target cell is the first beam direction, and the first number is different from the second number. The processing module sends, through the transceiver module, the second switch decision result to the second DU, where the second switch decision result includes second indication information, and the second indication information indicates the transmission configuration indicator state, with the second number, of the target cell.

In a possible implementation, the processing module is further configured to: number the transmission configuration indicator state number, with the second number, of the target cell to the transmission configuration indicator state with the first number, and configure the transmission configuration indicator state, with the first number, of the target cell in a configuration of a serving cell currently accessed by the terminal device.

For technical effects brought by the possible implementations of the ninth aspect, refer to descriptions of the technical effects of the fourth aspect or the possible implementations of the fourth aspect.

According to a tenth aspect, an embodiment of this application provides a communication apparatus. The communication apparatus has a function of implementing behavior in the method embodiment in the fifth aspect. The communication apparatus (a first DU) may be a communication device, may be a component (for example, a processor, a chip, or a chip system) of the communication device, or may be a logic module or software that can implement all or some functions of the communication device. The function of the communication apparatus may be implemented by using hardware, or may be implemented by hardware executing corresponding software. The hardware or the software includes one or more modules or units corresponding to the function. In a possible implementation, the communication apparatus includes a processing module and a transceiver module. The processing module is configured to determine, based on measurement results of a plurality of CSI-RSs from a terminal device, to switch the terminal device to a target cell managed by a second DU, and determines that the terminal device communicates with the target cell in a first beam direction. The transceiver module is configured to send a first switch decision result to a CU, where the first switch decision result notifies the second DU that the terminal device is to switch to the target cell, and notifies the second DU of the first beam direction that is to be used when the target cell communicates with the terminal device.

In a possible implementation, the processing module is further configured to: configure a transmission configuration indicator state, with a first number, of the target cell in a configuration of a serving cell currently accessed by the terminal device; and send the first switch decision result to the CU through the transceiver module based on the configuration of the transmission configuration indicator state of the target cell in the serving cell, where the first switch decision result includes first indication information, and the first indication information indicates the transmission configuration indicator state, with the first number, of the target cell.

For technical effects brought by the possible implementations of the tenth aspect, refer to descriptions of the technical effects of the fifth aspect or the possible implementations of the fifth aspect.

According to an eleventh aspect, an embodiment of this application provides another communication apparatus. The communication apparatus includes a processor. The processor is coupled to a memory, and the memory is configured to store a program or instructions. When the program is executed or the instructions are executed by the processor, the communication apparatus is enabled to perform the method according to any possible implementation of the first aspect to the fifth aspect.

In this embodiment of this application, in a process of performing the method, a process of sending information (or a signal) in the method may be understood as a process of outputting information according to instructions of the processor. When the information is output, the processor outputs the information to a transceiver, so that the transceiver transmits the information. After the information is output by the processor, other processing may further need to be performed on the information before the information reaches the transceiver. Similarly, when the processor receives input information, the transceiver receives the information, and inputs the information into the processor. Further, after the transceiver receives the information, other processing may need to be performed on the information before the information is input into the processor.

An operation such as sending and/or receiving related to the processor may be generally understood as an instruction output based on the processor if there is no special description, or if the operation does not conflict with an actual function or internal logic of the operation in a related description.

In an implementation process, the processor may be a processor specially configured to perform these methods, or may be a processor, for example, a general-purpose processor that executes the computer instructions in the memory to perform these methods. For example, the processor may be further configured to execute the program stored in the memory. When the program is executed, the communication apparatus is enabled to perform the method according to any one of the first aspect or the possible implementations of the first aspect.

**In** a possible implementation, the memory is located outside the communication apparatus. **In** a possible implementation, the memory is located in the communication apparatus.

**In** a possible implementation, the processor and the memory may alternatively be integrated into one component, in other words, the processor and the memory may alternatively be integrated together.

**In** a possible implementation, the communication apparatus further includes the transceiver. The transceiver is configured to receive a signal, send a signal, or the like.

According to a twelfth aspect, this application provides another communication apparatus. The communication apparatus includes a processing circuit and an interface circuit. The interface circuit is configured to obtain data or output data. The processing circuit is configured to perform the method according to any possible implementation of the first aspect to the fifth aspect.

According to a thirteenth aspect, this application provides a computer-readable storage medium. The computer-readable storage medium stores a computer program, and the computer program includes program instructions. When the program instructions are executed, a computer is enabled to perform the method according to any possible implementation of the first aspect to the fifth aspect.

According to a fourteenth aspect, this application provides a computer program product. The computer program product includes a computer program, and the computer program includes program instructions. When the program instructions are executed, a computer is enabled to perform the method according to any possible implementation of the first aspect to the fifth aspect.

According to a fifteenth aspect, this application provides a communication system, including the communication apparatus according to any one of the sixth aspect or the possible implementations of the sixth aspect and the communication apparatus according to any one of the seventh aspect or the possible implementations of the seventh aspect. Optionally, the communication system further includes the communication apparatus according to any one of the eighth aspect or the possible implementations of the eighth aspect and the communication apparatus according to any one of the tenth aspect or the possible implementations of the tenth aspect. Optionally, the communication system further includes the communication apparatus according to any one of the ninth aspect or the possible implementations of the ninth aspect and the communication apparatus according to any one of the tenth aspect or the possible implementations of the tenth aspect.

According to a sixteenth aspect, this application provides a chip, including a processor and a communication interface. The processor reads, through the communication interface, instructions stored in a memory, to perform the method according to any one of the first aspect to the sixth aspect.

### BRIEF DESCRIPTION OF DRAWINGS

To describe the technical solutions in embodiments of this application or in the background more clearly, the following briefly describes the accompanying drawings for describing embodiments of this application or the background.
FIG. 1 is a diagram of a CU-DU separation architecture;
FIG. 2 is a flowchart of intra-DU L1/L2 switching;
FIG. 3 is a flowchart of inter-DU cell switching in a same CU;
FIG. 4 shows an example of a random access procedure;
FIG. 5 is an example of a wireless communication system according to an embodiment of this application;
FIG. 6 is an interaction flowchart of a cell switching method according to an embodiment of this application;
FIG. 7 is an interaction flowchart of another cell switching method according to an embodiment of this application;
FIG. 8 is an interaction flowchart of another cell switching method according to an embodiment of this application;
FIG. 9 is an interaction flowchart of another cell switching method according to an embodiment of this application;
FIG. 10 is an interaction flowchart of another cell switching method according to an embodiment of this application;
FIG. 11 is an interaction flowchart of another cell switching method according to an embodiment of this application;
FIG. 12 is an interaction flowchart of another cell switching method according to an embodiment of this application;
FIG. 13 is a diagram of a structure of a communication apparatus 1300 according to an embodiment of this application;
FIG. 14 is a diagram of a structure of another communication apparatus 140 according to an embodiment of this application; and
FIG. 15 is a diagram of a structure of another communication apparatus 150 according to an embodiment of this application.

### DESCRIPTION OF EMBODIMENTS

In the specification, claims, and accompanying drawings of this application, the terms "first", "second", and the like are merely used to distinguish between different objects, and are not used to describe a specific order. In addition, the terms "include" and "have" and any variations thereof are intended to cover non-exclusive inclusion. For example, processes, methods, systems, products, or devices that include a series of steps or units are not limited to listed steps or units, but instead, optionally further include steps or units that are not listed, or optionally further include other steps or units inherent to these processes, methods, products, or devices.

An "embodiment" mentioned in this specification means that a particular feature, structure, or characteristic described with reference to the embodiment may be included in at least one embodiment of this application. The phrase shown in various locations in the specification may not necessarily refer to a same embodiment, and is not an independent or optional embodiment exclusive from another embodiment. A person skilled in the art may explicitly and implicitly understand that the embodiment described herein may be combined with another embodiment.

Terms used in the following embodiments of this application are merely intended to describe specific embodiments, but are not intended to limit this application. The terms "one", "a", "the", "the foregoing", "this", and "the one" of singular forms used in this specification and the appended claims of this application are also intended to include plural forms, unless otherwise specified in the context clearly. It should also be understood that the term "and/or" used in this application means and includes any or all possible combinations of one or more listed items. For example, "A and/or B" may represent three cases: Only A exists, only B exists, and both A and B exist, where A and B may be singular or plural. The term "a plurality of" used in this application means two or more.

It may be understood that in embodiments of this application, "B corresponding to A" indicates that there is a correspondence between A and B, and B may be determined based on A. However, it should be further understood that determining (or generating) B according to (or based on) A does not mean that B is determined (or generated) according to (or based on) only A, and B may alternatively be determined (or generated) according to (or based on) A and/or other information.

The following first describes terms and technical solutions in embodiments of this application.

### CU-DU separation architecture

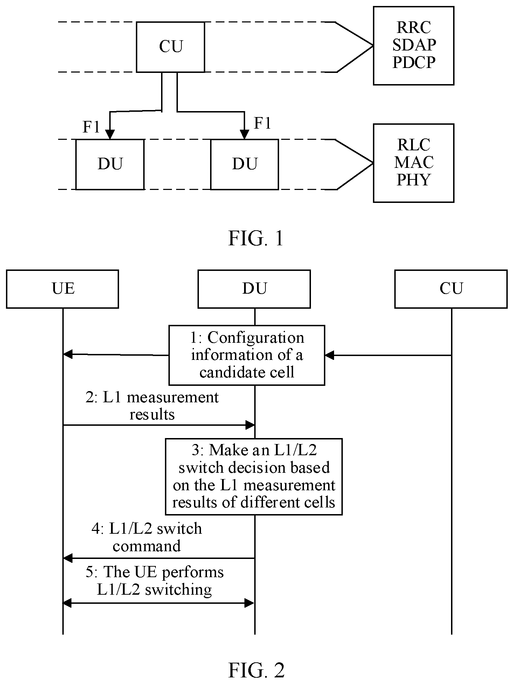

A 5G base station is logically divided into a central unit (central unit, CU) and one or more distributed units (distributed units, DUs). In other words, the 5G base station uses a CU-DU separation architecture. FIG. 1 is a diagram of a CU-DU separation architecture. Refer to FIG. 1. Each DU is connected to a CU through an F1 logical interface. Operations related to a radio link control (radio link control, RLC) layer, a media access control (media access control, MAC) layer, and a physical layer (physical layer, PHY) are processed by the DU. Operations related to a service data adaptation protocol (service data adaptation protocol, SDAP) layer, a radio resource control (radio resource control, RRC) layer, and a packet data convergence protocol (packet data convergence protocol, PDCP) layer are processed by the CU.

### L1/L2 switching in the CU-DU separation architecture

L1 (layer 1) refers to the physical layer, and L2 refers to the MAC/RLC/PDCP/SDAP layer, in other words, L2 refers to any one or more layers of the MAC layer, RLC layer, PDCP layer, and SDAP layer. The L1/L2 switching may be referred to as layer 1/layer 2 switching. In an L1/L2 switching process, L2 mainly refers to the MAC layer. The L1/L2 switching means that switching-related operations are mainly performed at the physical layer and MAC layer. For example, a user equipment (user equipment, UE) sends an L1 measurement result to a base station by using physical layer control signaling (carried on a physical uplink control channel (physical uplink control channel, PUCCH)), and a physical layer of the base station reads the L1 measurement result, and sends, to the UE by using L1/L2 signaling, a switch decision made based on the measurement result. The L1/L2 signaling may be a message carried on a physical downlink control channel (physical downlink control channel, PDCCH), or may be a MAC control element (MAC control element, MAC CE).

It should be noted that the L1/L2 switching refers to L1 switching and/or L2 switching. When the L1 switching and the L2 switching are in an AND relationship, an operation related to a switching process is mainly performed by both L1 and L2. When the L1 switching and the L2 switching are in an OR relationship, a switching-related operation is mainly performed by L1 or L2. Because L1 and L2 are lower than the RRC layer (L3) in a protocol stack, the L1/L2 switching may also be referred to as low-layer switching, bottom-layer switching, or lower-layer switching. A name of a specific switching technology is not limited in this application.

Optionally, the L1/L2 switching is applicable to: (1) cross-DU cell switching in a same CU (to be specific, a source cell and a target cell belong to different DUs in the same CU); and (2) intra-DU cell switching (to be specific, a source cell and a target cell belong to a same DU). The source cell may be understood as a cell accessed by a UE before the UE performs the L1/L2 switching. The target cell may be understood as a cell accessed by the UE after the UE performs the L1/L2 switching. In other words, the L1/L2 switching performed by the UE is switching from the source cell to the target cell. It may be understood that, if future L1/L2 switching supports cross-CU switching, a cell switching solution provided in this application is applicable to a cross-CU switching scenario after simple extension or adjustment. In other words, when a person skilled in the art does not make any inventive contribution, a solution obtained by extending the cell switching solution provided in this application to another scenario falls within the protection scope in this field.

In the foregoing scenarios of the L1/L2 switching, specific signaling exchange content varies, but basic principles are the same. The following describes an intra-DU cell switching procedure. FIG. 2 is a flowchart of intra-DU L1/L2 switching. As shown in FIG. 2, an intra-DU L1/L2 switching procedure includes the following steps.

Step 1: A CU sends configuration information of a candidate cell to a UE through a DU. The configuration information (or referred to as pre-configuration information) of the candidate cell may be pre-configuration information of a plurality of candidate cells (pre-configuration of candidate cells).

Step 2: The UE sends L1 measurement results of different cells to the DU on a communication resource of a source cell. The L1 measurement results (L1 measurement reports) include at least one of the following: an L1 measurement result of the source cell and an L1 measurement result of at least one candidate cell. The L1 measurement result of the source cell and/or the candidate cell may be a cell-level measurement result, or may be a beam-level measurement result.

Step 3: The DU makes an L1/L2 switch decision based on the L1 measurement results of the different cells. The DU determines, based on the L1 measurement results of the different cells, that the UE needs to perform L1/L2 switching, to be specific, needs to switch to a target cell.

Step 4: The DU sends identification information of the associated target cell to the UE by using an L1/L2 switch command. The L1/L2 switch command is still sent on the communication resource of the source cell. Further, the L1/L2 switch command may indicate information about a beam direction that needs to be used by the UE when the UE communicates with the target cell.

Step 5: The UE performs the L1/L2 switching. For example, the UE accesses the target cell by using configuration information that is of the target cell and that is received in step 1, and starts to perform uplink and downlink data transmission with the target cell after the access is successful. Further, the UE may perform the uplink and downlink data transmission with the target cell by using the beam direction information indicated in step 4. In a process in which the UE performs the L1/L2 switching, the UE needs to perform a random access procedure to implement uplink synchronization with a base station.

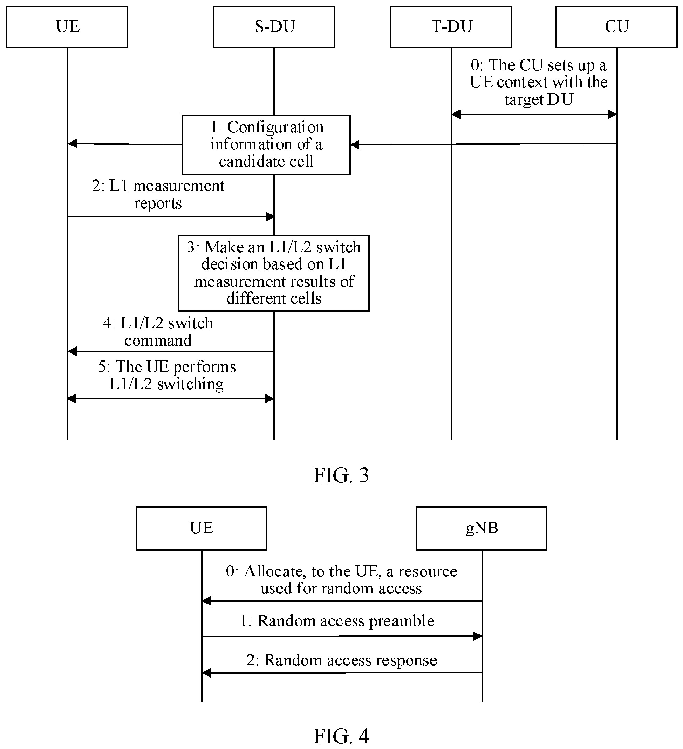

FIG. 2 is the flowchart of the intra-DU L1/L2 switching. The following describes an inter-DU cell switching procedure in a same CU. FIG. 3 is a flowchart of inter-DU cell switching in a same CU. As shown in FIG. 3, an inter-DU cell switching procedure in the same CU includes the following steps.

Step 0: The CU sets up a UE context with a target DU (namely, a T-DU in FIG. 3), to obtain configuration information of a cell managed by the target DU. The configuration information that is of the cell managed by the target DU and that is obtained by the CU is sent to a UE as a configuration of a candidate cell in subsequent step 1. It should be understood that the target DU may also be referred to as a candidate DU before switching. When it is determined, in a switch decision, that a target cell is a cell managed by a candidate DU, the candidate DU may be referred to as the target DU.

Step 1: The CU sends configuration information of a candidate cell to the UE through a source DU (namely, an S-DU in FIG. 3).

Step 2: The UE sends L1 measurement results of different cells to the DU on a communication resource of a source cell.

Step 3: The DU makes an L1/L2 switch decision based on the L1 measurement results of the different cells.

Step 4: The DU sends identification information of the associated target cell to the UE by using an L1/L2 switch command. The L1/L2 switch command is still sent on the communication resource of the source cell. Further, the L1/L2 switch command may indicate information about a beam direction that needs to be used by the UE when the UE communicates with the target cell.

Step 5: The UE performs L1/L2 switching.

In comparison with the procedure in FIG. 2, the procedure in FIG. 3 has the following two differences:
(1) Step 0 is added. The CU sets up the UE context with the target DU, obtains the configuration information of the cell managed by the target DU, and sends the configuration information to the UE as the configuration of the candidate cell in subsequent step 1. It should be understood that the target DU may also be referred to as a candidate DU before the switching. When it is determined, in the switch decision, that the target cell is a cell managed by a candidate DU, the candidate DU may be referred to as the target DU.
(2) Step 5 in FIG. 2 and step 5 in FIG. 3 are different. The UE accesses the target DU.

### Random access (random access, RA)

In a 5G system, RA/RACH (random access channel) refers to random access, to be specific, a UE accesses a network device (for example, a base station) by sending a preamble to the network device. The following describes random access by using a contention-free random access procedure as an example to. FIG. 4 shows an example of a random access procedure. Refer to FIG. 4. A contention-free random access procedure includes the following steps.

Step 0: A network device allocates, to a UE, a resource used for random access, including a preamble indication.

Step 1: The UE sends a random access preamble indicated by the network device. Before sending the random access preamble, the UE measures a plurality of downlink beam directions. For example, the beam directions are associated with synchronization signal and physical broadcast channel blocks (synchronization signal and physical broadcast channel blocks, SSBs). The UE measures SSBs in four beam directions, namely, an SSB #1, an SSB #2, an SSB #3, and an SSB #4, considers that channel quality in the beam direction of the SSB #3 is good, and selects a time-frequency resource corresponding to the SSB #3 to send the preamble. After receiving the preamble on the time-frequency resource, the network device learns that the beam direction corresponding to SSB #3 needs to be used when the network device communicates with the UE.

Step 2: The network device returns a random access response to the UE. The random access response message may be sent in the beam direction indicated by the UE in step 1.

In the random access procedure, the network device can calculate timing advance (timing advance, TA) information of the UE by using the received preamble, and indicate a TA to the UE in step 2. The UE subsequently performs uplink sending time adjustment by using the indicated TA. In this random access procedure, the UE and the network device complete uplink synchronization. In addition, in the random access procedure, the network device completes beam direction alignment for communication with the UE, and can communicate with the UE in a good beam direction. The UE and the network device complete the uplink synchronization between the UE and the network device through the random access, and complete the beam direction alignment for communication with the UE.

When switching from a source cell to the target cell, the UE needs to complete uplink synchronization with the target cell, to be specific, obtain a TA of the target cell. In a common cell switching process, a UE completes uplink synchronization with a target cell through a random access procedure. This process causes switching interruption duration. Therefore, how to reduce the interruption duration caused by cell switching is required. This application provides a cell switching solution that can reduce interruption duration for cell switching, to reduce the interruption duration for the cell switching by exempting a RACH process.

The following first provides, with reference to the accompanying drawings, an example of a system architecture to which a cell switching solution provided in this application is applicable.

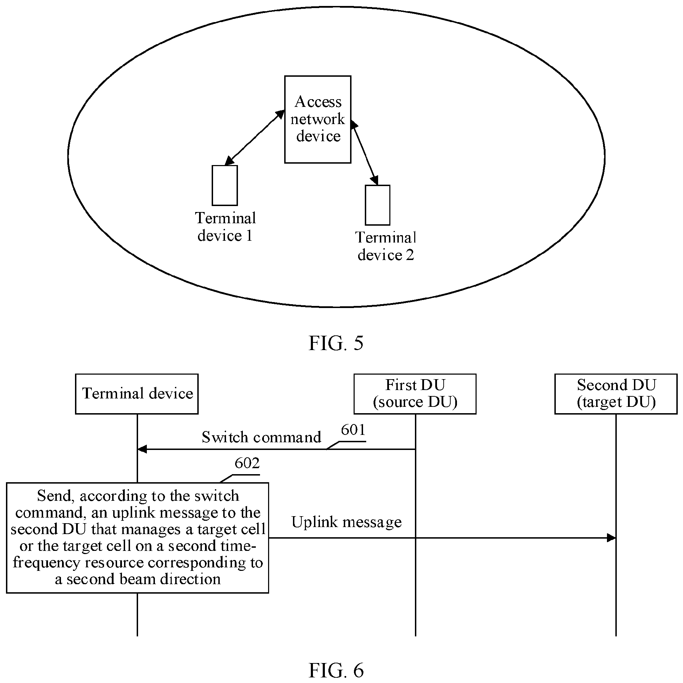

FIG. 5 is an example of a wireless communication system according to an embodiment of this application. As shown in FIG. 5, the communication system includes one or more terminal devices, where only two terminal devices are used as an example (only a terminal device 1 and a terminal device 2 are shown) in FIG. 5; and one or more access network devices (for example, a base station) that can provide a communication service for the terminal device, where only one access network device is used as an example in FIG. 5. In some embodiments, the wireless communication system may include cells, each cell includes one or more access network devices, and the access network device provides a communication service for a plurality of terminal devices. In the wireless communication system, point-to-point communication may also be performed. For example, a plurality of terminal devices communicate with each other. A UE is located within a coverage area of one or more cells (carriers) provided by the access network device, in other words, there may be one or more cells serving the UE. When there are a plurality of cells serving the UE, the UE may work in a dual connectivity (dual connectivity, DC) or coordinated multi-point transmission mode.

The terminal device is a device that has a wireless transceiver function, namely, a device that provides voice and/or data connectivity for a user. The terminal device may also be referred to as a terminal, a user equipment (user equipment, UE), a mobile station (mobile station, MS), a mobile terminal (mobile terminal, MT), or the like. The terminal device may communicate with one or more core network (core network, CN) devices (or referred to as core devices) through an access network device (or referred to as an access device) in a radio access network (radio access network, RAN). Currently, some examples of the terminal device are a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote surgery (remote surgery), a wireless terminal in a smart grid (smart grid), a wireless terminal in transportation safety (transportation safety), a wireless terminal in a smart city (smart city), a wireless terminal in a smart home (smart home), a subscriber unit (subscriber unit), a cellular phone (cellular phone), a wireless data card, a personal digital assistant (personal digital assistant, PDA) computer, a laptop computer (laptop computer), a machine type communication (machine type communication, MTC) terminal, and an unmanned aerial vehicle. The terminal device may be a terminal in any form in 5G and a communication system evolved after 5G, or the like. This is not limited in this application.

The access network device is a radio access network (radio access network, RAN) node (or device) that connects the terminal device to a wireless network, and may also be referred to as a base station. Currently, some examples of the RAN node are a further evolved NodeB (gNB), a transmission reception point (transmission reception point, TRP), an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), a wireless fidelity (wireless fidelity, Wi-Fi) access point (access point, AP), a satellite, and integrated access and backhaul (integrated access and backhaul, IAB). In addition, in a network structure, the access network device may be a RAN device including a CU node or a DU node, or may be a RAN device including a CU node and a DU node. The RAN device including the CU node and the DU node splits protocol layers of a gNB in an NR system. Functions of some protocol layers are controlled by the CU in a centralized manner. Functions of some or all of remaining protocol layers are distributed in the DU, and the CU controls the DU in a centralized manner.

The cell switching solution provided in embodiments of this application is also applicable to another communication system, for example, a universal mobile telecommunications system (universal mobile telecommunications system, UMTS), a wireless local area network (wireless local area network, WLAN), a long term evolution (long term evolution, LTE) system, an LTE frequency division duplex (frequency division duplex, FDD) system, an LTE time division duplex (time division duplex, TDD) system, a worldwide interoperability for microwave access (worldwide interoperability for microwave access, WiMAX) communication system, a 5th generation (5th generation, 5G) communication system, or a future 6th generation (6th generation, 6G) communication system.

The foregoing communication systems to which the cell switching solution provided in embodiments of this application is applicable are merely examples for description. The communication system to which this application is applicable is not limited thereto. This is uniformly described herein, and details are not described below again.

The following describes, with reference to the accompanying drawings, the cell switching solution provided in embodiments of this application.

FIG. 6 is an interaction flowchart of a cell switching method according to an embodiment of this application. As shown in FIG. 6, the method includes the following steps.

601: A first DU sends a switch command to a terminal device.

Correspondingly, the terminal device receives the switch command from the first DU. In this application, the switch command may be a layer 1 or layer 2 switch command (which may be referred to as an L1/L2 switch command), a layer 3 switch command, or another command for implementing cell switching. This is not limited in this application. The first DU is a DU currently serving the terminal device. In other words, the first DU manages a source cell currently accessed by the terminal device. In this application, the first DU may be considered as a source DU, namely, an S-DU. The first DU may be replaced with an access network device, for example, a base station, a gNB, an eNB, a BTS, or an AP. The switch command instructs the terminal device to switch to a target cell and to communicate with the target cell in a first beam direction.

The switch command may include at least one of the following indication information: identity-related indication information of the target cell, beam direction-related indication information of the target cell, or TA-related indication information of the target cell. The identity-related indication information of the target cell and the beam direction-related indication information of the target cell are mandatory. The TA-related indication information of the target cell is optional. The identity-related indication information of the target cell indicates an identity of the target cell, for example, an identifier of the target cell. The beam direction-related indication information of the target cell indicates a beam direction that needs to be used for communication between the terminal device and the target cell. For example, the beam direction-related indication information of the target cell indicates the terminal device to communicate with the target cell in the first beam direction. Optionally, the beam direction-related indication information of the target cell is an identifier of a reference signal corresponding to the first beam direction, for example, a CSI-RS #1 (Channel State Information-Reference Signal, channel state information reference signal), or the beam direction-related indication information of the target cell is an identifier of a TCI (Transmission Configuration Indicator, transmission configuration indicator) state corresponding to the first beam direction, for example, a TCI state #1, where the TCI state #1 is associated with the CSI-RS #1.

It should be noted that in this embodiment of this application, there are two manners of indicating a beam direction. In one manner, a TCI state indicates a beam direction. For example, the TCI state #1 indicates (or corresponds to) the first beam direction. In the other manner, a measurement reference signal indicates (or corresponds to) a beam direction. For example, the CSI-RS #1 indicates the first beam direction. There are two manners in which the terminal device determines, based on an identifier of a measurement reference signal (which may be referred to as a reference signal for short below) in the switch command, the beam direction that needs to be used for communication with the target cell. In a first manner, the terminal device first determines a TCI state corresponding to the measurement reference signal, and then determines a beam direction corresponding to the TCI state. For example, the terminal device first determines that the CSI-RS #1 corresponds to the TCI state #1, and then determines that the TCI state #1 corresponds to the first beam direction. In a second manner, a beam direction corresponding to the measurement reference signal is directly determined. For example, the first beam direction corresponding to the CSI-RS #1 is directly determined. In the first manner, there is a correspondence between the measurement reference signal and the TCI state. In the second manner, there is a correspondence between the measurement reference signal and the beam direction. A reason why an identifier of a reference signal can indicate the first beam direction is as follows: Before the first DU performs step 601, the terminal device reports, to the first UE, a measurement result of the reference signal corresponding to the first beam direction, and the terminal device learns of a mapping relationship between a measurement reference signal and a beam direction, for example, the correspondence between the first beam direction and the CSI-RS #1, from information about a candidate cell from the first DU, and the terminal device may learn that the CSI-RS #1 corresponds to the first beam direction. A reason why an identifier of a TCI state can indicate the first beam direction is as follows: Before the first DU performs step 601, the terminal device reports, to the first UE, a measurement result of a reference signal (for example, the CSI-RS #1) corresponding to the first beam direction, and the first DU learns of a mapping relationship between a measurement reference signal and a beam direction from information about a candidate cell from a CU. For example, the first DU can learn that the CSI-RS #1 corresponds to the TCI state #1, so that the first DU can instruct, in the switch command, the terminal device to communicate with the target cell in the beam direction corresponding to the TCI state #1.

In comparison with an existing switch command, one or more fields (or referred to as fields) are added to the switch command in this embodiment of this application. Optionally, in comparison with the existing switch command, a first field (or referred to as a first field) newly added to the switch command in this embodiment of this application includes the TA-related indication information of the target cell. Optionally, in comparison with the existing switch command, a second field (or referred to as a second field) newly added to the switch command in this embodiment of this application includes the beam direction-related indication information of the target cell, for example, indication information 1 below.

After receiving the switch command, and before performing step 602, the terminal device may perform the following operation: The terminal device determines a second beam direction associated with the first beam direction. The first beam direction may be considered as a narrow beam direction, and the second beam direction may be considered as a wide beam direction. One wide beam direction may be associated with a plurality of narrow beam directions, and one narrow beam direction may be associated with only one wide beam direction. Compared with the narrow beam direction, the wide beam direction has a larger coverage area and a larger beam angle. Optionally, the first beam direction corresponds to one CSI-RS, the second beam direction corresponds to one SSB, and the CSI-RS corresponding to the first beam direction is one of a plurality of CSI-RSs associated with the SSB corresponding to the second beam direction. It may be understood that a beam direction corresponding to an SSB is a wide beam direction, a beam direction corresponding to a CSI-RS is a narrow beam direction, and a beam direction corresponding to each CSI-RS is associated with a beam direction corresponding to one SSB. In other words, each CSI-RS is associated with one SSB. For example, the CSI-RS #1 is associated with an SSB #1, a CSI-RS #2 is associated with the SSB #1, a CSI-RS #3 is associated with an SSB #2, and a CSI-RS #4 is associated with the SSB #2. The terminal device may store an association relationship between a CSI-RS and an SSB, and may determine, by using the association relationship, an SSB associated with any CSI-RS. A possible implementation in which the terminal device determines the second beam direction associated with the first beam direction is as follows: The terminal device determines, by using the association relationship, the second beam direction corresponding to a first SSB associated with a first CSI-RS corresponding to the first beam direction. Alternatively, the terminal device determines, by using the association relationship, the second beam direction associated with the first beam direction. The SSB is a wide beam direction, and the CSI-RS is a narrow beam direction. Compared with the CSI-RS, the SSB may cover a larger area. Each SSB is associated with a plurality of CSI-RSs. Because a quantity of CSI-RSs is greater than a quantity of SSBs, uplink grants that are used to associate with the SSBs are fewer than uplink grants that are used to associate with the CSI-RSs. If the uplink grant is periodic, the terminal device may more quickly select the uplink grant associated with the SSB, to accelerate a process in which the terminal device accesses the target cell.

602: The terminal device sends, according to the switch command, an uplink message to a second DU that manages the target cell or the target cell on a second time-frequency resource corresponding to the second beam direction.

Correspondingly, the second DU receives the uplink message sent by the terminal device on the second time-frequency resource corresponding to the second beam direction. The second DU may be considered as a target DU. It should be understood that before a switch decision, the target DU may be referred to as a candidate DU, and after the switch decision, a candidate DU that manages the target cell may be referred to as the target DU. A quantity of candidate DUs is not limited in this application. In this embodiment, only one source DU (namely, the first DU) and one candidate DU (namely, the second DU) are used as an example for description.

The uplink message may indicate that the terminal device is accessing the target cell managed by the second DU. Optionally, the uplink message further notifies the second DU or the target cell of a beam direction that needs to be used for communication with the terminal device. The uplink message includes at least one of the following: indication information related to an identity of the terminal device (for example, a cell radio network temporary identifier (cell radio network temporary identifier, C-RNTI) media access control (media access control, MAC) control element (control element, CE), or uplink information scrambled by using the C-RNTI), or information about the beam direction that needs to be used for communication between the target cell and the terminal device (for example, a TCI state or a reference signal ID indicated in the switch command). The reference signal ID corresponds to the first beam direction. It may be understood that the second DU determines the first beam direction based on the reference signal ID indicated in the uplink message. The indication information related to the identity of the terminal device may alternatively be carried in an implicit manner. For example, the terminal device scrambles the uplink information by using the C-RNTI, and after the second DU or the target cell successfully descrambles the uplink message by using the C-RNTI of the terminal device, the second DU or the target cell may learn of information about the identity of the terminal device. For another example, an uplink grant of the candidate cell is a dedicated resource configured for each terminal device. When receiving the uplink message on a specific uplink grant resource, the second DU or the target cell may learn of information about the identity of the terminal device.

A periodicity of a time-frequency resource corresponding to the second beam direction is shorter than a periodicity of a time-frequency resource corresponding to the first beam direction. The time-frequency resource corresponding to the second beam direction includes the second time-frequency resource. For example, the second time-frequency resource belongs to one of a plurality of time-frequency resources that have a second periodicity, the first time-frequency resource corresponding to the first beam direction belongs to one of a plurality of time-frequency resources that have a first periodicity, and the second periodicity is shorter than the first periodicity. In other words, the time-frequency resource corresponding to the second beam direction appears once every second periodicity, and the time-frequency resource corresponding to the first beam direction appears once every first periodicity. Because the second periodicity is shorter than the first periodicity, there is a high probability that the uplink message can be sent earlier on the time-frequency resource corresponding to the second beam direction than on the time-frequency resource corresponding to the first beam direction. It may be understood that, the terminal device needs to wait for a maximum of X1 milliseconds (namely, the second periodicity) to send the uplink message on the time-frequency resource corresponding to the second beam direction, and needs to wait for a maximum of X2 milliseconds (namely, the first periodicity) to send the uplink message on the first time-frequency resource corresponding to the first beam direction, where X1 is less than X2. The time-frequency resource corresponding to the second beam direction is pre-configured by a network device (for example, a CU to which the first DU belongs) for the terminal device. It should be understood that, the terminal device may send the uplink message more quickly with a higher probability on the time-frequency resource corresponding to the second beam direction than on the time-frequency resource corresponding to the first beam direction. Therefore, the network device (for example, the CU to which the first DU belongs) may pre-configure only the time-frequency resource corresponding to the second beam direction for the terminal device, and does not need to configure the time-frequency resource corresponding to the first beam direction. For example, the network device (for example, the CU to which the first DU belongs) may pre-configure, for the terminal device, a time-frequency resource corresponding to the SSB (for example, a time-frequency resource or a PUCCH resource corresponding to the uplink grant), and does not need to configure a time-frequency resource corresponding to the CSI-RS. In other words, the terminal device needs to learn of the time-frequency resource corresponding to the second beam direction, does not need to learn of the time-frequency resource corresponding to the first beam direction, and does not need to learn of the periodicity of the time-frequency resource corresponding to the first beam direction. The first DU may learn of the time-frequency resource corresponding to the first beam direction, or may not learn of the time-frequency resource corresponding to the first beam direction. This is not limited in this application. It may be understood that, for the terminal device, the periodicity of the time-frequency resource corresponding to the first beam direction does not exist. In this embodiment of this application, the periodicity of the time-frequency resource corresponding to the first beam direction is mentioned to describe a beneficial effect brought by sending the uplink message to the second DU that manages the target cell or the target cell on the second time-frequency resource corresponding to the second beam direction.

In a possible implementation, the second time-frequency resource is a time-frequency resource corresponding to a first uplink grant corresponding to the second beam direction, and the first uplink grant is one of a plurality of periodic uplink grants of the target cell. In other words, the plurality of uplink grants of the target cell appear periodically. Optionally, the first uplink grant is one of a plurality of uplink grants that are of the target cell and that have the second periodicity, in other words, each uplink grant of the target cell appears once every second periodicity. For example, a sequence in which the plurality of uplink grants that are of the target cell and that have the second periodicity appear is as follows: an uplink grant 1, an uplink grant 2, ..., an uplink grant K, an uplink grant 1, an uplink grant 2, ... Duration between a previous uplink grant 1 and a next uplink grant 1 is the second periodicity, in other words, each uplink grant appears once every second periodicity, where K is an integer greater than 1. Different uplink grants have different time-frequency resource locations, and each uplink grant corresponds to one beam direction. The correspondence between the uplink grant and the beam direction may be specified in a pre-configuration. In an existing technical solution, the terminal device sends, according to the switch command, the uplink message to the second DU that manages the target cell or the target cell on a time-frequency resource corresponding to an uplink grant corresponding to the first beam direction. Because the second periodicity of the uplink grant corresponding to the second beam direction is shorter than the first periodicity of the uplink grant corresponding to the first beam direction, the uplink message can be sent earlier on the time-frequency resource corresponding to the second beam direction than on the time-frequency resource corresponding to the first beam direction.

Optionally, when the network device (for example, the CU to which the first DU belongs) pre-configures the correspondence between the uplink grant and the beam direction for the terminal device, a correspondence between an uplink grant and an SSB (a wide beam direction) may be pre-configured. The terminal device indicates CSI-RS (narrow beam direction) information in an uplink message sent by using the uplink grant corresponding to the SSB. For example, the beam direction (namely, the first beam direction) indicated in the switch command corresponds to the CSI-RS #4. When identifying that the CSI-RS #4 is associated with the SSB #2, the terminal device sends an uplink message by using an uplink grant corresponding to the SSB #2 (corresponding to the second beam direction), and the uplink message indicates an identifier of the CSI-RS #4. An advantage of this manner is that the SSB is a wide beam direction, a small quantity of SSBs can cover a large area, and a small quantity of uplink grants are used to associate the SSBs. If the uplink grant is periodic, the terminal device may more quickly select an uplink grant corresponding to an SSB, to accelerate the process in which the terminal device accesses the target cell.

In a possible implementation, the second time-frequency resource is a PUCCH resource corresponding to the second beam direction, and the PUCCH resource corresponding to the second beam direction is one of a plurality of periodic PUCCH resources of the target cell. In other words, the plurality of PUCCH resources of the target cell appear periodically. Optionally, the PUCCH resource corresponding to the second beam direction is one of a plurality of PUCCH resources that are of the target cell and that have the second periodicity, in other words, each PUCCH resource of the target cell appears once every second periodicity. For example, a sequence in which the plurality of PUCCH resources that are of the target cell and that have the second periodicity appear is as follows: a PUCCH resource 1, a PUCCH resource 2, ..., a PUCCH resource F, a PUCCH resource 1, a PUCCH resource 2, ... Duration occupied between a previous PUCCH resource 1 and a next PUCCH resource 1 is the second periodicity, in other words, each PUCCH resource appears once every second periodicity, where F is an integer greater than 1. Each PUCCH resource corresponds to one beam direction, and the correspondence between the PUCCH resource and the beam direction may be specified in a pre-configuration. In a technical solution, the terminal device sends, according to the switch command, the uplink message to the second DU that manages the target cell or the target cell on a PUCCH resource corresponding to the first beam direction. Because the second periodicity of the PUCCH resource corresponding to the second beam direction is shorter than the first periodicity of the PUCCH resource corresponding to the first beam direction, the uplink message can be sent earlier on the PUCCH resource corresponding to the second beam direction than on the PUCCH resource corresponding to the first beam direction.

In a possible implementation, the uplink message includes first indication information. The first indication information, namely, the indication information 1, indicates the target cell to communicate with the terminal device in the first beam direction. The indication information 1 may include an identifier of the terminal device and an identifier of the first beam direction. In this implementation, the indication information 1 indicates the target cell to communicate with the terminal device in the first beam direction, so that the target cell can communicate with the terminal device in a preferred beam direction.

In a possible implementation, step 602 is replaced with the following: The terminal device sends, according to the switch command, an uplink message to the second DU that manages the target cell or the target cell on any available time-frequency resource, where indication information 1 in the uplink message indicates the target cell to communicate with the terminal device in the first beam direction. In this implementation, the terminal device may send, in the first beam direction, the uplink message to the second DU that manages the target cell or the target cell, the second DU may receive a signal (or a message) sent by the terminal device in the first beam direction, and the second DU may send a signal (or a message) to the terminal device in the first beam direction indicated by using the indication information 1. In this implementation, the second DU is capable of performing omnidirectional receiving. Therefore, the second DU can receive the uplink message sent by the terminal device to the second DU. Once the terminal device has an available time-frequency resource, the terminal device can send the uplink message to the second DU, so that the uplink message can be sent earlier, to complete beam alignment between the terminal device and the second DU or the target cell.

In this embodiment of this application, the terminal device sends, according to the switch command, the uplink message to the second DU that manages the target cell or the target cell on the second time-frequency resource corresponding to the second beam direction, so that the process in which the terminal device accesses the target cell can be accelerated.

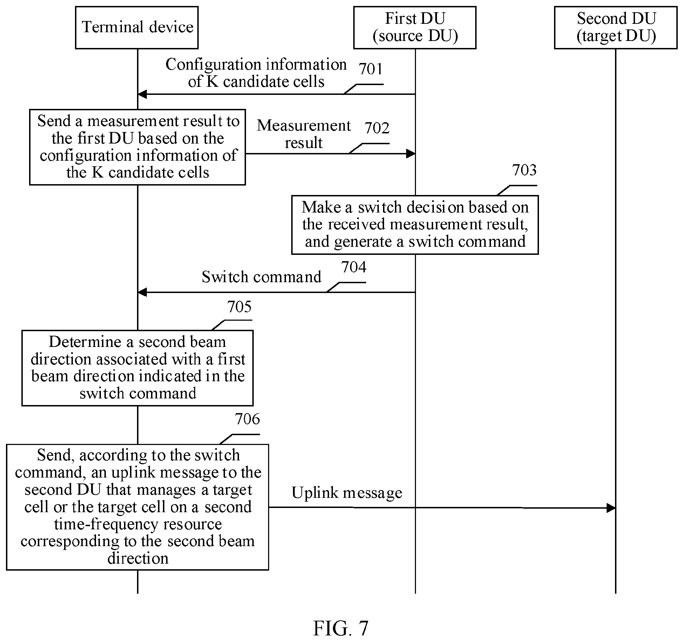

FIG. 7 is an interaction flowchart of another cell switching method according to an embodiment of this application. An interaction procedure of the method in FIG. 7 is a possible implementation of the method described in FIG. 6. In this implementation, a second beam direction associated with a first beam direction indicated in a switch command is determined based on a pre-configured association relationship, to accelerate a process in which a terminal device accesses a target cell. As shown in FIG. 7, the method includes the following steps.

701: A first DU sends configuration information of K candidate cells to the terminal device.

Correspondingly, the terminal device receives the configuration information of the K candidate cells from the first DU. K is an integer greater than 0. The first DU is a DU currently serving the terminal device. The configuration information of each candidate cell may include a plurality of uplink grants of the candidate cell and a correspondence between each uplink grant and a beam direction. The correspondence between the uplink grant and the beam direction herein may be a correspondence between each uplink grant and a wide beam direction, for example, a correspondence between an uplink grant and a beam direction corresponding to an SSB. It should be noted that a plurality of uplink grants of any candidate cell appear periodically. Alternatively, configuration information of each candidate cell may include PUCCH configuration information and SR configuration information of the candidate cell, and a correspondence between each PUCCH resource and a beam direction. The correspondence between each PUCCH resource and a beam direction herein may be a correspondence between each PUCCH resource and a wide beam direction, for example, a correspondence between a PUCCH resource and a beam direction corresponding to an SSB. It should be noted that a plurality of PUCCH resources of any candidate cell appear periodically.

702: The terminal device sends a measurement result to the first DU based on the configuration information of the K candidate cells.

The measurement result is obtained by performing layer 1 measurement on the K candidate cells based on the configuration information of the K candidate cells, or may be obtained by performing other measurement on the K candidate cells. This is not limited herein. Before performing step 702, the terminal device may perform the following operations: The terminal device performs the layer 1 measurement on the K candidate cells based on the configuration information of the K candidate cells, to obtain an L1 measurement result of the K candidate cells; and performs the layer 1 measurement on a currently accessed source cell, to obtain an L1 measurement result of the source cell. It is optional to perform the layer 1 measurement on the source cell. The measurement result may include the L1 measurement result of the source cell and an L1 measurement result of at least one candidate cell. The L1 measurement results of the source cell and the candidate cell may be cell-level measurement results, or may be beam-level measurement results.

703: The first DU makes a switch decision based on the received measurement result, and generates a switch command.

The switch command instructs the terminal device to switch to the target cell and to communicate with the target cell in a first beam direction. The target cell is one of the K candidate cells.

A possible implementation of step 703 is as follows: determining signal quality of each candidate cell based on the received measurement result; and determining to switch the terminal device to the target cell, where signal quality of the target cell is higher than signal quality of a serving cell. For example, the target cell is a cell with highest signal quality in the K candidate cells. For another example, the target cell is any cell that is in the K candidate cells and whose signal quality is higher than that of the serving cell. In this implementation, the terminal device switches to the target cell whose signal quality is higher than that of the serving cell, so that communication quality of the terminal device can be improved.

A possible implementation of step 703 is as follows: obtaining (or sensing) F candidate cells on which RACH-less switching can be performed in the K candidate cells; determining signal quality of each of the F candidate cells based on the received measurement result; and determining to switch the terminal device to a target cell in the F candidate cells, where signal quality of the target cell is higher than signal quality of a serving cell, and F is an integer greater than 0. In other words, if the first DU can sense candidate cells on which the RACH-less switching can be performed, when making the switch decision, the first DU comprehensively considers the measurement result of the candidate cells in combination with whether the RACH-less switching can be performed. For example, when signal quality of a candidate cell 1 and signal quality of a candidate cell 2 are higher than that of the serving cell, in other words, both the candidate cell 1 and the candidate cell 2 are suitable for switching, the first DU identifies that the RACH-less switching can be performed on the candidate cell 1, but the RACH-less switching cannot be performed on the candidate cell 2. In this case, the first DU switches the terminal device to the candidate cell 1, and switching interruption duration is reduced through the RACH-less switching. In this implementation, the terminal device switches to the target cell on which the RACH-less switching can be performed and whose signal quality is higher than that of the serving cell. This can reduce interruption duration and improve communication quality of the terminal device.

Two possible implementations in which the first DU makes the switch decision based on the received measurement result are provided above. The first DU may alternatively make the switch decision based on the received measurement result in another manner. This is not limited in this embodiment of this application.

704: The first DU sends the switch command to the terminal device.

For step 704, refer to step 601.

705: The terminal device determines a second beam direction associated with the first beam direction indicated in the switch command.

The switch command may include an identifier of the first beam direction. For example, the switch command includes a CSI-RS #1, and the CSI-RS #1 corresponds to the first beam direction. In this example, the configuration information of the candidate cell includes a mapping relationship between a beam direction and a measurement reference signal, for example, includes a correspondence between a TCI state #6 and a CSI-RS #1. The terminal device may learn, based on the configuration information of the candidate cell, that the TCI state #6 corresponds to the CSI-RS #1, determine the TCI state #6 based on the CSI-RS #1, and determine the first beam direction based on the TCI state #6. For another example, the switch command includes a TCI state #6, and the TCI state #6 corresponds to the first beam direction.

In a possible implementation, the first beam direction is a beam direction, namely, a narrow beam direction, corresponding to a CSI-RS, and the second beam direction is a beam direction, namely, a wide beam direction corresponding to an SSB. The terminal device configures an association relationship between the CSI-RS and the SSB. An implementation of step 705 is as follows: determining, based on the association relationship between the CSI-RS and the SSB, the second beam direction corresponding to a first SSB associated with a first CSI-RS corresponding to the first beam direction. In other words, the first beam direction indicated in the switch command corresponds to the first CSI-RS, and the terminal device determines, based on the association relationship, the first SSB associated with the first CSI-RS, where a beam direction corresponding to the first SSB is the second beam direction. In this implementation, the second beam direction associated with the first beam direction can be accurately and quickly determined based on the association relationship between the CSI-RS and the SSB.

In a possible implementation, the first beam direction indicated in the switch command corresponds to a first TCI state. For example, the switch command includes the TCI state #6. A correspondence between a CSI-RS and a TCI state and the association relationship between the CSI-RS and the SSB are configured in the terminal device. An implementation of step 705 is as follows: determining, based on the correspondence between the CSI-RS and the TCI state, that the first TCI state corresponds to a first CSI-RS; and determining, based on the association relationship between the CSI-RS and the SSB, the second beam direction corresponding to a first SSB associated with the first CSI-RS corresponding to the first beam direction. In other words, the first beam direction indicated in the switch command corresponds to the first TCI state. The terminal device first determines the first CSI-RS corresponding to the first TCI state, and then determines, based on the association relationship, the first SSB associated with the first CSI-RS, where a beam direction corresponding to the first SSB is the second beam direction. In this implementation, the second beam direction associated with the first beam direction can be accurately and quickly determined based on the association relationship between the CSI-RS and the SSB.

706: Send, according to the switch command, an uplink message to a second DU that manages the target cell or the target cell on a second time-frequency resource corresponding to the second beam direction.

For step 706, refer to step 602 and the following step 805.

A possible implementation of step 706 is as follows: When configuration information of the target cell includes an uplink grant of the target cell, sending, according to the switch command, the uplink message to the second DU that manages the target cell or the target cell on a time-frequency resource corresponding to a first uplink grant corresponding to the second beam direction. Optionally, the uplink message includes first indication information, namely, indication information 1. The indication information 1 indicates the target cell to communicate with the terminal device in the first beam direction. For example, the beam direction indicated in the switch command indicated by the first DU corresponds to a CSI-RS #4. If identifying that the CSI-RS #4 is associated with an SSB #2, the terminal device sends an uplink message on an uplink grant corresponding to the SSB #2, where the uplink message includes an identifier of the CSI-RS #4, that is, indicates the first beam direction. In this implementation, the uplink message can be sent more quickly.

Another possible implementation of step 706 is as follows: When configuration information of the target cell does not include an uplink grant of the target cell but includes PUCCH configuration information and SR configuration information, sending, according to the switch command, the uplink message to the second DU that manages the target cell or the target cell on a PUCCH resource corresponding to the second beam direction. The configuration information of the target cell may include the PUCCH configuration information and the SR configuration information of the target cell, and a correspondence between each PUCCH resource and a beam direction, for example, a correspondence between a PUCCH resource and an SSB. The uplink message may include a scheduling request used to request an uplink grant and indication information 1, and the indication information 1 indicates the target cell to communicate with the terminal device in the first beam direction. For example, when the terminal device does not have an uplink grant used to send identity information of the terminal device, the terminal device triggers a scheduling request process, to be specific, waits for a resource that can be used for sending a scheduling request; and sends, according to the switch command, the scheduling request and the indication information 1 to the second DU that manages the target cell or the target cell on the PUCCH resource corresponding to the second beam direction, where the scheduling request is used to request an uplink grant, and the scheduling request and the indication information 1 are included in the uplink message. The sending, according to the switch command, the scheduling request and the indication information 1 to the second DU that manages the target cell or the target cell on the PUCCH resource corresponding to the second beam direction may be as follows: When no uplink grant from the second DU is received within preset duration after the switch command is received, sending the scheduling request and the indication information 1 to the second DU that manages the target cell or the target cell on the second time-frequency resource. In this way, sending of the scheduling request can be reduced. That no uplink grant from the second DU is received within preset duration after the switch command is received includes: No uplink grant from the second DU is received before a timer expires, where a start time point of the timer is a time point at which the scheduling request process is triggered. Duration of the timer is also set as required. In this implementation, the scheduling request and the indication information 1 are sent to the second DU that manages the target cell or the target cell on the PUCCH resource corresponding to the second beam direction, so that the target cell is accessed more quickly.

Another possible implementation of step 706 is as follows: When configuration information of the target cell does not include an uplink grant of the target cell but includes PUCCH configuration information and SR configuration information, the terminal device sends, according to the switch command, a scheduling request to the second DU that manages the target cell or the target cell on a PUCCH resource corresponding to the second beam direction; and receives grant information that is sent by the second DU for the scheduling request, where the grant information indicates a second uplink grant available to the terminal device; and the terminal device sends second indication information to the second DU or the target cell based on the second uplink grant, where the second indication information indicates that the first beam direction is to be used for communication with the terminal device. The scheduling request and the second indication information may be separately considered as the uplink message.

In this embodiment of this application, the second beam direction associated with the first beam direction indicated in the switch command is determined based on the pre-configured association relationship; and the uplink message is sent, according to the switch command, to the second DU that manages the target cell or the target cell on the second time-frequency resource corresponding to the second beam direction, so that a process in which the terminal device accesses the target cell can be accelerated.

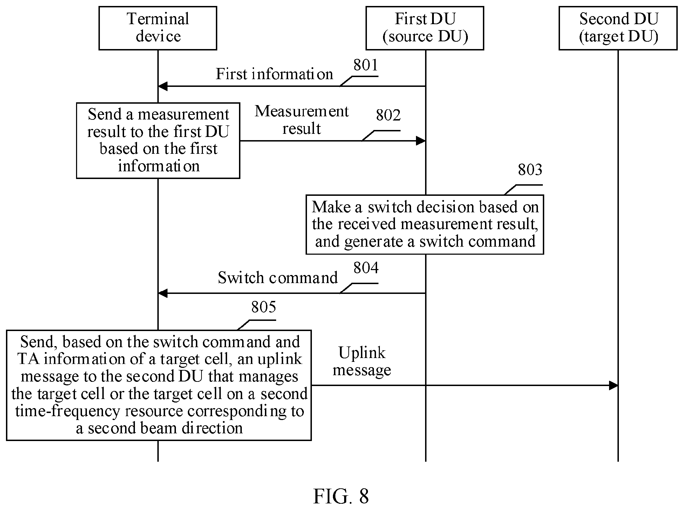

FIG. 8 is an interaction flowchart of another cell switching method according to an embodiment of this application. An interaction procedure of the method in FIG. 8 is a possible implementation of the method described in FIG. 6. In this implementation, a terminal device sends an uplink message to a second DU or a target cell based on TA information of the target cell, to implement RACH-less cell switching, reduce switching interruption duration, and quickly complete beam alignment with the target cell, so as to improve communication reliability and a capacity. As shown in FIG. 8, the method includes the following steps.

801: A first DU sends first information to the terminal device.

Correspondingly, the terminal device receives the first information from the first DU. The first information includes configuration information of K candidate cells, where K is an integer greater than 0. It should be understood that, in a CU-DU separation architecture, the first information sent by the first DU to the terminal may be from a CU associated with the first DU.

802: The terminal device sends a measurement result to the first DU based on the first information.

For step 802, refer to step 702.

803: The first DU makes a switch decision based on the received measurement result, and generates a switch command.

For step 803, refer to step 703.

If the first DU can sense candidate cells, of the terminal device, on which the RACH-less switching can be performed, when making the switch decision, the first DU may comprehensively consider the measurement result of the candidate cells in combination with whether the RACH-less switching can be performed. Optionally, the target cell is a cell that is in the K candidate cells, whose signal quality is higher than that of a serving cell (namely, a cell currently accessed by the terminal device, or referred to as a source cell), and on which the RACH-less switching can be performed. For example, the target cell is a cell that is in the K candidate cells and that is with highest signal quality in a plurality of cells on which the RACH-less switching can be performed. In this application, the cell on which the RACH-less switching can be performed includes at least one of the following types of cells: a cell that has a same TA as the serving cell, a cell whose TA is 0, and a cell whose TA value is known by the first DU. For the cell whose TA value is known by the first DU, it may be understood that before the terminal device performs cell switching, an access network device (for example, the first DU) measures an uplink signal sent by the terminal device, and calculates TA values that need to be used by the terminal device for some candidate cells. A specific algorithm for calculating the TA value by the access network device is not limited in this embodiment of this application.

804: The first DU sends the switch command to the terminal device.

Correspondingly, the terminal device receives the switch command from the first DU.

805: The terminal device sends, based on the switch command and the TA information of the target cell, an uplink message to the second DU that manages the target cell or the target cell on a second time-frequency resource corresponding to a second beam direction.

For step 805, refer to step 602. The uplink message indicates that the terminal device is accessing the target cell. In other words, the uplink message indicates that the terminal device is in access to the target cell. Before performing step 805, the terminal device may determine the second beam direction associated with a first beam direction indicated in the switch command. Refer to step 705.

In a possible implementation, the configuration information of the K candidate cells includes TA information of one or more candidate cells, and the target cell is included in the plurality of candidate cells. Before performing step 805, the terminal device obtains the TA information of the target cell based on the switch command and the configuration information of the K candidate cells.

In a possible implementation, the switch command includes the TA information of the target cell.

It should be understood that when the configuration information of the K candidate cells includes the TA information of the one or more candidate cells, the switch command may not include the TA information of the target cell, and the terminal device obtains the TA information of the target cell based on the first information and the switch command. When the configuration information of the K candidate cells includes the TA information of the one or more candidate cells, the switch command may also include the TA information of the target cell. The terminal device uses the TA information that is of the target cell and that is provided in the switch command, in other words, the terminal device uses the updated TA information that is of the target cell and that is provided by the first DU. When the configuration information of the K candidate cells does not include the TA information of the target cell, the switch command needs to include the TA information of the target cell.

In a possible implementation, the uplink message includes indication information 1, and the indication information 1 indicates the target cell to communicate with the terminal device in the first beam direction. In other words, the indication information 1 indicates the target cell to communicate with the terminal device in a third beam direction, and the third beam direction corresponds to the first beam direction. The third beam direction and the first beam direction correspond to a same beam. A difference between the third beam direction and the first beam direction lies in different beam directions. The third beam direction is a beam direction from the second DU to the terminal device, and the first beam direction is a beam direction from the terminal device to the second UU. In other words, the third beam direction is opposite to the first beam direction. For example, the third beam direction and the first beam direction correspond to a beam corresponding to a TCI state #2. For another example, the third beam direction and the first beam direction correspond to a beam corresponding to a CSI-RS #2.

An implementation of step 805 may be classified into two cases, namely, a case 1 and a case 2.

Case 1: Pre-configuration information of the candidate cell includes uplink grant (UL grant) information of the candidate cell. The terminal device may send the uplink message to the second DU or the target cell by using an uplink grant of the target cell and the TA information of the target cell.

Optionally, in addition to the foregoing manner in which the uplink message explicitly carries the beam direction indication, the beam direction indication may alternatively be implicitly indicated to the second DU or the target cell. For example, there are a plurality of uplink grants of the candidate cell (for example, the uplink grants periodically appear), different uplink grants have different time-frequency resource locations, and each uplink grant corresponds to one beam direction. The correspondence (namely, the correspondence between the uplink grant and the beam direction) may be specified in the pre-configuration information. Optionally, the terminal device selects a corresponding uplink grant based on the beam direction indicated in the switch command, and sends the uplink message at a time-frequency resource location corresponding to the uplink grant. After receiving the uplink message at a time-frequency location of a specific uplink grant, the second DU or the target cell can infer a beam direction that needs to be used for communication with the terminal device. For example, both the second DU and the terminal device store a correspondence between an uplink grant 1 and a beam direction 1 and a correspondence between the uplink grant 1 and a time-frequency location. The terminal device sends an uplink message at the time-frequency location corresponding to the uplink grant 1. After receiving the uplink message at the time-frequency location of the uplink grant 1, the second DU or the target cell infers that the beam direction that needs to be used for communication with the terminal device is the beam direction 1 corresponding to the uplink grant 1.

A possible implementation of step 805 is as follows: The terminal device sends, based on the switch command and the TA information of the target cell, an uplink message to the second DU that manages the target cell or the target cell on a time-frequency resource corresponding to a first uplink grant corresponding to the second beam direction, where the uplink message includes the indication information 1. For example, a periodicity of the uplink grant corresponding to the first beam direction is H milliseconds, in other words, the uplink grant corresponding to the first beam direction can be used after a maximum of H milliseconds; and a periodicity of the uplink grant corresponding to the second beam direction is G milliseconds, in other words, the uplink grant corresponding to the second beam direction can be used after a maximum of G milliseconds, where both G and H are real numbers greater than 0, and G is less than H. Optionally, the first beam direction corresponds to a channel state information reference signal (channel state information reference signal, CSI-RS), the second beam direction corresponds to a synchronization signal and physical broadcast channel block (synchronization signal and physical broadcast channel block, SSB), and the CSI-RS corresponding to the first beam direction is one of a plurality of CSI-RSs associated with the SSB corresponding to the second beam direction.

Case 2: Pre-configuration information of the candidate cell does not include uplink grant information of the candidate cell, but includes physical uplink control channel (physical uplink control channel, PUCCH) configuration information and scheduling request (scheduling request, SR) configuration information of the candidate cell. After receiving the switch command, when the terminal device identifies that there is no pre-configured uplink grant and there is a PUCCH and an SR that are configured, the terminal device may trigger an SR process, to be specific, send a scheduling request to the second DU or the target cell by using the PUCCH. For example, after the terminal device receives the switch command, when the switch command instructs the terminal device to switch to the target cell in a RACH-less manner, the terminal device sends a C-RNTI MAC CE to the second DU, to indicate an identity of the accessing terminal device. However, when the terminal device identifies that there is no available uplink grant, the terminal device triggers an SR process, in other words, when the terminal device has no uplink grant used to send identity information of the terminal device, the terminal device triggers an SR. When the terminal device sends a C-RNTI MAC CE in an uplink data packet, the terminal device cancels the previously triggered SR. For a process in which the terminal device indicates the beam direction to the second DU/target cell, refer to the process in the case 1. An explicit indication manner, an implicit indication manner, or a combination of an implicit indication manner and an explicit indication manner is used. Details are not described herein again, and only the correspondence between the uplink grant and the beam direction is changed to a correspondence between a PUCCH resource and a beam direction. A possible implementation of step 805 is as follows: sending, based on the switch command and the TA information of the target cell, a scheduling request to the second DU or the target cell at a location of a PUCCH resource corresponding to the second beam direction, where the scheduling request is used for an uplink grant, the scheduling request is included in the uplink message, the second beam direction is associated with the first beam direction, and a periodicity of the PUCCH resource corresponding to the second beam direction is shorter than a periodicity of a PUCCH resource corresponding to the first beam direction. For example, the beam direction (namely, the first beam direction) indicated in the switch command indicated by the first DU corresponds to a CSI-RS #4. The terminal device identifies that the CSI-RS #4 is associated with an SSB #2, and sends the uplink message at a location of a PUCCH resource corresponding to the SSB #2 (corresponding to the second beam direction), and the uplink message indicates an identifier of the CSI-RS #4. An advantage of this manner is that the SSB is a wide beam direction, a small quantity of SSBs can cover a large area, and a small quantity of PUCCH resource locations are used to associate the SSBs. If the location of the PUCCH resource is periodic, the terminal device may more quickly select a location of a PUCCH resource corresponding to an SSB, to accelerate a process in which the terminal device accesses the target cell.

The case 1 and the case 2 may be used in combination. For example, when the terminal device identifies that there is an available uplink grant in the pre-configuration information, the manner in the case 1 is used; or if the terminal device identifies that there is no available uplink grant, the manner in the case 2 is used.

The terminal device sends the uplink message to the second DU or the target cell based on the switch command and the TAinformation of the target cell, to implement uplink synchronization with the target cell without needing to perform RACH. Therefore, the cell switching method provided in this embodiment of this application can implement the RACH-less cell switching, in other words, implement the uplink synchronization with the target cell without needing to perform the RACH. In addition, the uplink message further indicates, to the second DU or the target cell, the second beam direction that is to be used for communication with the terminal device, so that the beam alignment with the target cell can be quickly completed.

In a possible implementation, the first beam direction is a beam direction corresponding to a first reference signal; and after switching to the target cell, the terminal device performs the following operation: communicating with the target cell in the beam direction corresponding to the first reference signal (for example, a CSI-RS #1). In this implementation, the communication with the target cell is performed in the beam direction corresponding to the first reference signal, so that the beam alignment with the target cell can be completed.

In this embodiment of this application, the terminal device sends the uplink message to the second DU or the target cell based on the switch command and the TA information of the target cell, to implement the RACH-less cell switching, reduce the switching interruption duration, quickly complete the beam alignment with the target cell, and improve the communication reliability and the capacity.

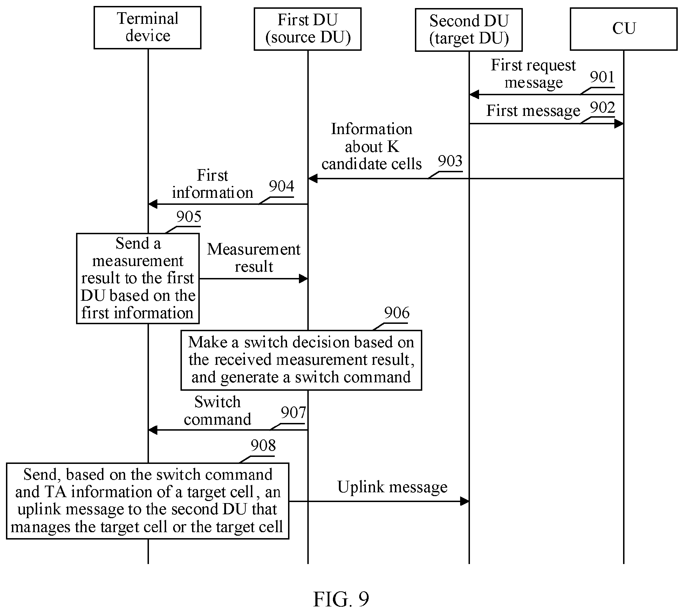

FIG. 9 is an interaction flowchart of another cell switching method according to an embodiment of this application. An interaction procedure of the method in FIG. 9 is a possible implementation of the method described in FIG. 8. In this implementation, a CU obtains configuration information and TA information of a candidate cell from a second DU, and sends the configuration information and the TA information to a terminal device through a first DU, to implement RACH-less cell switching in a CU-DU separation architecture, and reduce switching interruption duration. As shown in FIG. 9, the method includes the following steps.

901: The CU sends a first request message to the second DU.

Correspondingly, the second DU receives the first request message from the CU. The first request message is a request message for requesting candidate cell information of the terminal device. In FIG. 9, for the terminal device, the first DU is a source DU, and the second DU is a target DU. The first DU manages a cell that is currently accessed by the terminal device, namely, a source cell. A cell managed by the second DU is a cell to which the terminal device may switch to, in other words, the terminal device may switch to the cell managed by the second DU. The cell managed by the second DU may be considered as a candidate cell of the terminal device. It should be understood that before a switch decision, the target DU is a candidate DU. After the switch decision, if a target cell is managed by the candidate DU, the candidate DU is also the target DU. A quantity of candidate DUs is not limited in this application. In this embodiment of this application, only one source DU and one candidate DU are used as an example for description.

The first request message is used to obtain information about the candidate cell managed by the second DU. The first request message may indicate that a reason why the CU sends the first request message is to obtain information about a candidate cell for cell switching. For example, the first request message is a terminal device context setup request (UE CONTEXT SETUP REQUEST) message on an F1 interface, and a cause value that is of the setup request and that is carried in the message is to request the second DU to provide the information about the candidate cell. The first request message may indicate that the information that is about the candidate cell and that is provided by the second DU needs to include TA information of the candidate cell. Optionally, the first request message indicates that a reason why the CU sends the first request message is to obtain the TA information of the candidate cell. It should be understood that the first DU (the source DU) may also provide a part of candidate cells, in other words, the CU may also send a second request message to the first DU to request information about the candidate cell. For example, the second request message is a terminal device context modification request (UE CONTEXT MODIFICATION REQUEST) message on the F1 interface, and a cause value that is of the setup request and that is carried in the message is to request the first DU to provide the information about the candidate cell. The request message may indicate that the information that is about the candidate cell and that is requested to be provided by the first DU needs to include TA information of the candidate cell. The information about the candidate cell may include one or more of configuration information of the candidate cell, the TA information of the candidate cell, and a correspondence between a CSI-RS of the candidate cell and a transmission configuration indicator state (transmission configuration indication state, TCI state). The TA information of the candidate cell and the correspondence between the CSI-RS of the candidate cell and the transmission configuration indicator state may also be considered as the configuration information of the candidate cell.

Optionally, the CU determines, based on a current service type of the terminal device, whether to request the TAinformation of the candidate cell in the first request message. For example, when the CU senses that a current service expects to implement a low-latency cell switching process, the CU may request, when requesting configuration information of a candidate cell, the second DU to provide TA information of the candidate cell.

Optionally, the first request message indicates that the second DU needs to provide configuration information of a candidate cell on which the RACH-less switching can be performed. For example, the first request message indicates the second DU to provide configuration information of a candidate cell whose TA is 0. In this example, the second DU may provide configuration information of one or more candidate cells for the first request message, and a TA of each of the one or more candidate cells is 0. It may be understood that, the configuration information that is of the one or more candidate cells and that is provided by the second DU for the first request message implies that the TA of each of the one or more candidate cells is 0. For another example, the first request message indicates the second DU to provide a candidate cell that can use a same TA as the source cell. In this example, the second DU may provide configuration information of one or more candidate cells for the first request message, and a TA of each of the one or more candidate cells is equal to a TA of the source cell. It may be understood that the configuration information that is of the one or more candidate cells and that may be provided by the second DU for the first request message implies that the TA of each of the one or more candidate cells is equal to the TA of the source cell. It may be understood that when the CU indicates, in the first request message, the second DU to provide the candidate cell that can use the same TA as the source cell, the CU needs to include information about the source cell in the request message, so that the second DU determines candidate cells that can use the same TA as the source cell. When the CU indicates, in the second request message, the first DU to provide a candidate cell that can use the same TA as the source cell, the first DU may determine, based on a cell deployment status, the candidate cell that can use the same TA as the source cell. For example, a candidate cell that is co-antenna deployed with the source cell can use the same TA as the source cell.

902: The second DU sends a first message to the CU based on the first request message.

Correspondingly, the CU receives the first message from the second DU. The first message includes information about K candidate cells of the terminal device. The information about the K candidate cells includes configuration information of the K candidate cells and TA information of one or more candidate cells.

Optionally, the first request message indicates the second DU to provide configuration information of a candidate cell on which RACH-less switching can be performed, and the first message indicates the configuration information of the K candidate cells on which the RACH-less switching can be performed. For example, the first request message indicates the second DU to provide the configuration information of the candidate cell whose TA is 0, and the first message indicates configuration information of K candidate cells whose TAs are 0. For another example, the first request message indicates the second DU to provide the configuration information of the candidate cell whose TA is the same as that of the source cell, and the first message indicates configuration information of K candidate cells whose TAs are the same as that of the source cell.

For example, the second DU sends a terminal device context setup response (UE CONTEXT SETUP RESPONSE) message or a terminal device context modification response (UE CONTEXT MODIFICATION RESPONSE) message on the F1 interface, where the message includes the first message. Alternatively, the first message is a terminal device context setup response or a terminal device context modification response. The second DU may provide the TA information in the following two manners:
Manner a: The second DU may place the TA information in an RRC container (container) information element, in other words, the CU and the first DU do not need to sense specific TA information, and the CU directly sends the TA information to the terminal device through the first DU by using an RRC message.
Manner b: A field is added to the terminal device context setup response message and/or the terminal device context modification response message, and the field is used by the second DU to indicate the TA information of the candidate cell to the CU, in other words, the CU and the first DU can sense specific TA information.

The TA information may indicate a TA, indicate that a TA of the candidate cell is 0, indicate that the TA of a candidate cell is the same as that of the source cell, indicate that a cell in a source cell group (for example, in a carrier aggregation or multi-connection scenario, the terminal device has a plurality of source cells, that is, a source cell group) has a same TA, or indicate that a TA group in a source cell group has a same TA, where the TA group is a cell group including one or more cells having the same TA.

Optionally, the configuration information of the candidate cell includes at least one of the following: a beam direction configuration, a measurement reference signal configuration, or a configuration of a mapping relationship between a beam direction and a measurement reference signal. For example, the candidate cell is denoted as a cell 1, and a beam direction of the cell 1 is indicated by using a TCI state. The mapping relationship between the beam direction and the measurement reference signal may include a correspondence between a CSI-RS and a TCI state. The mapping relationship between the beam direction and the measurement reference signal may further include a correspondence between an SSB and a TCI state. For example, the mapping relationship between the beam direction and the measurement reference signal includes: a TCI state #1 corresponds to an SSB #1, a TCI state #2 corresponds to an SSB #2, a TCI state #3 corresponds to an SSB #3, a TCI state #4 corresponds to an SSB #4, a TCI state #5 corresponds to an SSB #5, a TCI state #6 corresponds to a CSI-RS #1, a TCI state #7 corresponds to a CSI-RS #2, a TCI state #8 corresponds to a CSI-RS #3, a TCI state #9 corresponds to a CSI-RS #4, and a TCI state #10 corresponds to a CSI-RS #5. Alternatively, the mapping relationship may be notified by the second DU to the CU in the foregoing manner a or manner b. Details are not described herein again. In addition to the configuration related to the beam direction and the measurement reference signal, a configuration of the candidate cell further includes other configuration information required by the terminal device for communication in the candidate cell, for example, a physical uplink data channel configuration, a physical downlink data channel configuration, a physical uplink control channel configuration, and a physical downlink control channel configuration.

903: The CU sends the information about the K candidate cells to the first DU.

Correspondingly, the first DU receives the information about the K candidate cells from the CU. The first DU is a DU currently serving the terminal device.

Optionally, the information about the K candidate cells includes the configuration information of the K candidate cells on which the RACH-less switching can be performed. For example, the first request message indicates the second DU to provide the configuration information of the candidate cell whose TA is 0, and the information about the K candidate cells includes the configuration information of the K candidate cells whose TAs are 0. For another example, the first request message indicates the second DU to provide the configuration information of the candidate cell whose TA is the same as that of the source cell, and the information about the K candidate cells includes configuration information of K candidate cells whose TA is the same as that of the source cell.

If the second DU sends the configuration information and the TAinformation of the candidate cell to the CU in the manner a in step 902, the CU may directly forward the information in the RRC container to the first DU without needing to perform additional processing on the information.

In step 902, if the second DU sends the configuration information and the TA information of the candidate cell to the CU in the manner b, the CU may read the configuration information and the TA information of the candidate cell, and may perform further processing.

For the TA information, the CU may add a field to an F1 interface message, to indicate the TA information of the candidate cell, and notify the first DU of the TA information by using the field on the F1 interface. For the beam direction configuration, the measurement reference signal configuration, and the measurement reference signal mapping relationship configuration, the CU may add one or more fields to the F1 interface message, and notify the first DU of one or more of the foregoing configurations.

Optionally, the CU selects, based on a service type, one or more candidate cells from the K candidate cells provided by the second DU, and sends configuration information and TA information of the candidate cells to the first DU. For example, the CU identifies that a current service type requires a low interruption latency to complete cell switching, and the CU may notify the first DU of configuration information and TA information that are provided by the second DU and that are of a candidate cell on which the RACH-less switching can be performed. It may be understood that, in this manner, the CU needs to sense the TA information of the candidate cell, in other words, the DU needs to send the TA information to the CU in the manner b in step 902.

In a possible implementation, the CU configures/adds a TCI state configuration (or referred to as the beam direction configuration) of the candidate cell in/to a configuration related to a serving cell (the source cell), the CU may configure/add the measurement reference signal configuration of the candidate cell in/to the configuration related to the serving cell (the source cell), or the CU may configure/add a mapping relationship between a measurement reference signal and a TCI state of the candidate cell (for example, a correspondence between a CSI-RS and a TCI state of the candidate cell) in/to the configuration related to the serving cell (the source cell). Optionally, the CU may alternatively configure the TA information of the candidate cell in the configuration related to the serving cell (the source cell). In this manner, before switching, the terminal device does not need to read or apply the configuration information of the candidate cell, and may perform reference signal measurement on the candidate cell only by using a configuration of the source cell, and receive a beam direction, of the candidate cell or the target cell, that is indicated by a network device (for example, the first DU) and that needs to be used after the switching. It may be understood that, in this manner, the CU needs to sense the configuration information of the candidate cell, in other words, the DU needs to send the configuration information to the CU in the manner b in step 902. It should be understood that, in some scenarios, the TCI state configuration and the measurement reference signal configuration are generated and managed by the DU, and the CU cannot add the TCI state configuration and the measurement reference signal configuration of the candidate cell to the configuration of the serving cell (the source cell). In this case, the CU may notify the first DU of at least one of the following configurations: the TCI state configuration of the candidate cell, the measurement reference signal configuration of the candidate cell, or the mapping relationship between the measurement reference signal and the TCI state of the candidate cell. The mapping relationship between the measurement reference signal and the TCI state of the candidate cell may include the mapping relationship between the CSI-RS and the TCI state. The first DU adds the configuration of the candidate cell to the configuration of the serving cell. The first DU may notify the CU of an updated configuration of the serving cell, and the CU sends the configuration of the serving cell (for example, including the TCI state configuration of the candidate cell) and another configuration of the candidate cell (for example, the physical uplink data channel configuration of the candidate cell) to the terminal device. It should be understood that a configuration message sent by the CU to the terminal is sent through the DU. A purpose of providing these configurations by the CU is to enable the first DU to select a TCI state, to be specific, to select a beam direction that needs to be used for communication between the terminal device and the target cell.

In another possible implementation, the CU uses a TCI state configuration and a measurement reference signal configuration of the candidate cell as configurations of the candidate cell. In this configuration manner, the terminal device needs to read configuration information of some candidate cells before switching, for example, read a measurement reference signal configuration of the candidate cell, to perform reference signal measurement on a neighboring cell and report a result. It may be understood that, in this manner, the CU does not need to sense the configuration information, in other words, whether the DU provides the configuration information for the CU in the manner a or the manner b in step 902 is not limited.

904: The first DU sends first information to the terminal device.

Correspondingly, the terminal device receives the first information from the first DU. The first information includes the configuration information of the K candidate cells. The first information may further include the TA information of the one or more candidate cells.

A possible implementation of step 904 is as follows: When the information about the K candidate cells includes the TA information of the K candidate cells, the first DU sends, to the terminal device, the first information including the TA information of the K candidate cells. An example of this implementation is as follows: In step 902, the second DU (namely, the second DU) provides the TA information of the candidate cell to the CU in the manner a (through the RRC container). In step 903, the CU sends the TA information of the candidate cell to the first DU, and the first DU further sends the TA information of the candidate cell to the terminal device by using the first information. The terminal device may learn of the TA information of the candidate cell from an RRC configuration of the first information.

A possible implementation of step 904 is as follows: When the information about the K candidate cells includes the configuration information and TA information of the K candidate cells, the first DU sends, to the terminal device, the first information including the configuration information and the TA information of the K candidate cells.

In a possible implementation, the first information does not include the TA information of the candidate cells, and the first DU indicates the TA information of the candidate cells to the terminal device in a subsequent switch command. In this manner, it may be understood that, in step 902, the second DU notifies the CU of the TA information of the candidate cells in the manner b. In step 903, the CU further notifies the first DU of the TA information. For example, the first DU needs to sense the TA information of the candidate cells by using an F1 interface message, so that the first DU can instruct, in the switch command, the terminal device to switch to the target cell and indicate TA information of the target cell. In this way, the terminal device can perform a RACH-less switching process.

905: The terminal device sends a measurement result to the first DU based on the first information.

For step 905, refer to step 702.

906: The first DU makes a switch decision based on the received measurement result, and generates the switch command.

For step 906, refer to step 703. The switch command indication instructs the terminal device to switch to the target cell and to communicate with the target cell in a first beam direction. The switch command may include TA-related indication information of the target cell. For example, the TA-related indication information of the target cell indicates that a TA of the target cell is 0.

Optionally, the switch command instructs the terminal device to switch to the target cell and to communicate with the target cell in the first beam direction corresponding to a first TCI state, and the TA of the target cell is 0. In other words, the first DU instructs the UE to switch to the target cell in a RACH-less manner, and to communicate with the target cell in the first beam direction corresponding to the first TCI state. The first DU uses the beam direction corresponding to the first TCI state as the beam direction that needs to be used for communication between the terminal device and the target cell, because in step 905, the terminal device reports a measurement result of a reference signal (including the SSB #1) corresponding to the first TCI state. The first DU can learn of a mapping relationship between a measurement reference signal of the candidate cell and a beam indication (namely, a TCI state) in step 903, for example, can learn that the SSB #1 corresponds to the first TCI state. Therefore, the first DU can instruct, in the switch command, that the beam direction that needs to be used by the terminal device when the terminal device switches to the target cell is the first TCI state.

Optionally, the switch command instructs the terminal device to switch to the target cell and to communicate with the target cell in the first beam direction corresponding to a first SSB. In this manner, the first DU does not need to sense the mapping relationship between the measurement reference signal of the candidate cell and the beam indication (namely, the TCI state), in other words, in step 903, the CU does not need to notify the first DU of the mapping relationship through the F1 interface. The first DU directly performs beam indication based on an identifier of the reference signal of the measurement result reported by the terminal device. For example, when the terminal device receives the SSB #1 indicating the target cell, the terminal device may identify, based on the previous configuration information of the candidate cell, that the SSB #1 of the target cell corresponds to the TCI state #1. In this case, after being switching to the target cell, the terminal device performs communication in the beam direction corresponding to the TCI state #1.

Another possible implementation of step 906 is as follows: The first DU determines, based on measurement results of a plurality of CSI-RSs from the terminal device, to switch the terminal device to the target cell, and determines that the terminal device communicates with the target cell in a beam direction corresponding to a first CSI-RS, where the first CSI-RS is included in the plurality of CSI-RSs, and the target cell is included in the K candidate cells. The first DU generates the switch command based on the first CSI-RS, where the switch command instructs the terminal device to switch to the target cell and to communicate with the target cell in the beam direction corresponding to the first CSI-RS. For example, the switch command includes an identifier of the first CSI-RS, for example, the CSI-RS #1, and the CSI-RS #1 corresponds to the first beam direction.

Another possible implementation of step 906 is as follows: The first DU determines, based on measurement results of a plurality of CSI-RSs from the terminal device, to switch the terminal device to the target cell, and determines that the terminal device communicates with the target cell in a beam direction corresponding to a first CSI-RS, where the first CSI-RS is included in the plurality of CSI-RSs, and the target cell is included in the K candidate cells. The first DU generates the switch command based on the first CSI-RS, where the switch command instructs the terminal device to switch to the target cell and to communicate with the target cell in the beam direction corresponding to the first CSI-RS. For example, the switch command includes an identifier of the first CSI-RS, for example, a CSI-RS #1, and the CSI-RS #1 corresponds to the first beam direction.

Another possible implementation of step 906 is as follows: The first DU determines, based on measurement results of a plurality of CSI-RSs from the terminal device, to switch the terminal device to the target cell, and determines that the terminal device communicates with the target cell in a beam direction corresponding to a first CSI-RS, where the first CSI-RS is included in the plurality of CSI-RSs, and the target cell is included in the K candidate cells. When the information about the K candidate cells includes correspondences between CSI-RSs of the K candidate cells and transmission configuration indicator states, the first DU determines, based on the correspondences, a first transmission configuration indicator state corresponding to the first CSI-RS; and generates the switch command, where the switch command instructs the terminal device to switch to the target cell and to communicate with the target cell in the beam direction corresponding to the first transmission configuration indicator state. The beam direction corresponding to the first transmission configuration indicator state is the first beam direction. For example, the switch command includes an identifier of the first transmission configuration indicator state, for example, the TCI state #6, and the TCI state #6 corresponds to the first beam direction.

907: The first DU sends the switch command to the terminal device.

For step 907, refer to step 704.

A possible implementation of step 907 is as follows: When the information about the K candidate cells includes the TA information of the K candidate cells, the first DU includes the TA information of the target cell in the switch command sent to the terminal device, where the target cell is included in the K candidate cells, and the switch command instructs the terminal device to switch to the target cell. The switch command may alternatively not carry the TA information of the target cell. If the first information sent by the first DU to the terminal device includes the TA information of the target cell, the switch command may not carry the TA information of the target cell, or may carry the TA information of the target cell. If the first information sent by the first DU to the terminal device does not include the TA information of the target cell, the switch command carries (or indicates) the TA information of the target cell.

908: The terminal device sends, based on the switch command and the TA information of the target cell, an uplink message to the second DU that manages the target cell or the target cell.

The uplink message indicates that the terminal device is accessing the target cell.

A possible implementation of step 908 is as follows: The terminal device sends, based on the switch command and the TA information of the target cell, the uplink message to the second DU that manages the target cell or the target cell on a time-frequency resource corresponding to the first beam direction. The time-frequency resource corresponding to the first beam direction may be a time-frequency resource corresponding to an uplink grant corresponding to the first beam direction, or may be a PUCCH resource corresponding to the first beam direction. Optionally, when an uplink grant of the target cell is configured on the terminal device, the terminal device sends the uplink message to the second DU that manages the target cell or the target cell on the time-frequency resource corresponding to the uplink grant corresponding to the first beam direction. For example, the terminal device knows that the target cell provides a pre-configured uplink grant in a pre-configuration phase, and sends the uplink message to the second DU that manages the target cell or the target cell on the time-frequency resource corresponding to the uplink grant corresponding to the first beam direction. Optionally, when no uplink grant of the target cell is configured on the terminal device, the terminal device sends the uplink message to the second DU that manages the target cell or the target cell on the PUCCH resource corresponding to the first beam direction. For example, when there is no uplink grant used to send identity information of the terminal device to the second DU or the target cell, the terminal device sends the uplink message to the second DU that manages the target cell or the target cell on the PUCCH resource corresponding to the first beam direction. The switch command may include an identifier of the first beam direction. For example, the switch command includes the SSB #1 (an SSB ID). In this example, the configuration information of the candidate cell includes the configuration of the mapping relationship between the beam direction and the measurement reference signal, for example, includes a correspondence between the TCI state #1 and the SSB #1. The terminal device may learn, based on the configuration information of the candidate cell, that the TCI state #1 corresponds to the SSB #1, and determine the first beam direction based on the TCI state #1.

In a possible implementation, step 908 is replaced with the following: The terminal device sends, according to the switch command, an uplink message to the second DU that manages the target cell or the target cell on any available time-frequency resource, where indication information 1 in the uplink message indicates the target cell to communicate with the terminal device in the first beam direction. In this implementation, the terminal device may send, in the first beam direction, the uplink message to the second DU that manages the target cell or the target cell, the second DU may receive a signal (or a message) sent by the terminal device in the first beam direction, and the second DU may send a signal (or a message) to the terminal device in the first beam direction indicated by using the indication information 1. In this implementation, the second DU is capable of performing omnidirectional receiving. Therefore, the second DU can receive the uplink message sent by the terminal device to the second DU. Once the terminal device has an available time-frequency resource, the terminal device can send the uplink message to the second DU, so that the uplink message can be sent earlier, to complete beam alignment between the terminal device and the second DU or the target cell.

In this embodiment of this application, the CU obtains the information about the candidate cell from the second DU, and sends the information to the terminal device through the first DU. The terminal device learns of the TA information of the target cell from the first information or the switch command, and completes uplink synchronization without needing to perform RACH, so that the RACH-less cell switching in the CU-DU separation architecture can be implemented. In this way, the switching interruption duration is reduced.

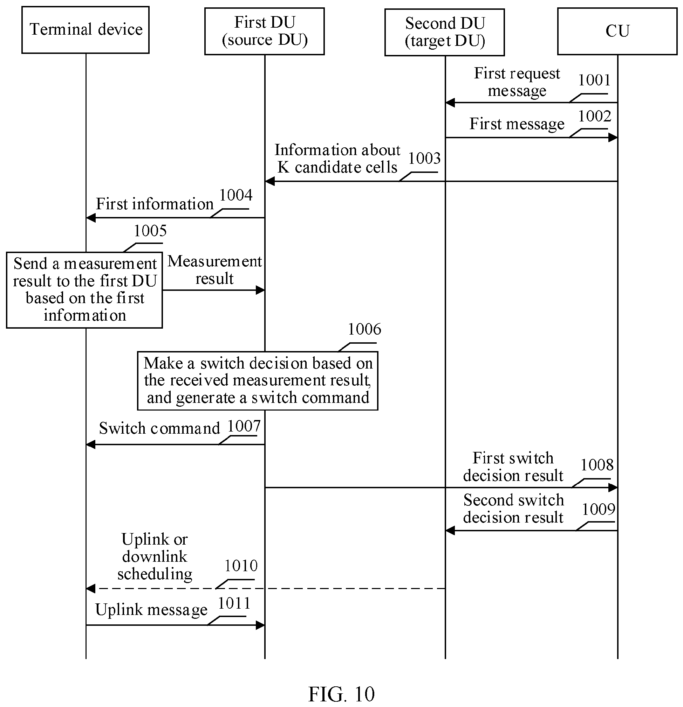

FIG. 10 is an interaction flowchart of another cell switching method according to an embodiment of this application. In this implementation, a CU obtains information about a candidate cell from a second DU, and sends the information to a terminal device through a first DU, to implement RACH-less cell switching in a CU-DU separation architecture, and reduce switching interruption duration. As shown in FIG. 10, the method includes the following steps.

1001: The CU sends a first request message to the second DU.

For step 1001, refer to step 901.

1002: The second DU sends the first message to the CU based on the first request message.

For step 1002, refer to step 902.

1003: The CU sends information about K candidate cells to the first DU.

For step 1003, refer to step 903.

1004: The first DU sends first information to the terminal device.

For step 1004, refer to step 904.

1005: The terminal device sends a measurement result to the first DU based on the first information.

For step 1005, refer to step 702.

1006: The first DU makes a switch decision based on the received measurement result, and generates a switch command.

For step 1006, refer to step 703 and/or step 906.

1007: The first DU sends the switch command to the terminal device.

For step 1007, refer to step 704 and/or step 907.

1008: The first DU sends a first switch decision result to the CU.

Correspondingly, the CU receives the first switch decision result sent by the first DU. The first switch decision result notifies the second DU that the terminal device is to switch to the target cell and notifies the second DU of a first beam direction that needs to be used when the target cell communicates with the terminal device. The first switch decision result may include target beam information and an identifier of the target cell, and the target beam information indicates the first beam direction that is to be used when the target cell communicates with the terminal device. The target beam information may be an identifier of the first beam direction, for example, a TCI state #1 or a CSI-RS #1.

In this embodiment of this application, a sequence of step 1007 and step 1008 is not limited, and a quantity of pieces of information in step 1008 is not limited. In a possible implementation (step 1008 is performed before step 1007), after making the switch decision, the first DU first notifies, through the CU, the second DU of content of the switch decision, namely, the first switch decision result; and then, the first DU sends the switch command to the terminal device in step 1007. If the terminal device returns a response message indicating that the switch command is successfully received, the first DU may notify, through the CU again, the second DU that the terminal device has successfully received the switch command. Alternatively, the first DU may not need to notify, through the CU again, the second DU of whether the terminal device has successfully received the switch command, and the second DU may make a decision by itself depending on whether the terminal device subsequently accesses the target cell. In another possible implementation (step 1008 is performed after step 1007), after making the switch decision, the first DU sends the switch command to the terminal device, and after receiving a response message indicating that the terminal device successfully receives the switch command, the first DU notifies, through the CU, the second DU of the first switch decision result. Alternatively, before receiving the response message indicating that the terminal device successfully receives the switch command, the first DU may notify, through the CU, the second DU of the first switch decision result. If the terminal device subsequently fails to receive the switch command or fails to perform the switching, the second DU may determine whether the terminal device subsequently accesses the target cell.

Optionally, the first beam direction is a beam direction corresponding to a first reference signal of the target cell, or the first beam direction is a beam direction corresponding to a first TCI state of the target cell, and the first TCI state corresponds to one reference signal of the target cell. If the first DU can sense a mapping relationship between a measurement reference signal and a beam direction in step 1003, the first DU may notify, through the CU, the second DU of beam indication information (namely, the target beam information), for example, the TCI state #1 of a candidate cell 1. A beam direction corresponding to the TCI state #1 is the first beam direction. If the first DU cannot sense the mapping relationship between the measurement reference signal and the beam direction, the first DU may notify, through the CU, the second DU of a measurement reference signal indication, for example, the CSI-RS #1 of a candidate cell. A beam direction corresponding to the CSI-RS #1 is the first beam direction.

Optionally, in step 1003, if the CU or the first DU configures TCI states of the candidate cells in a configuration related to a serving cell (source cell), and the CU or the first DU configures measurement reference signals of the candidate cells in the configuration related to the serving cell (a source cell), the following cases may exist: For example, the TCI state #1 to a TCI state #10 are configured in a beam direction generated for the candidate cell 1. However, because a TCI state #1 to a TCI state #10 of the source cell has been configured for the source cell, to configure the TCI states of the candidate cell 1 in the configuration related to the source cell, the CU or the first DU needs to renumber the TCI state #1 to the TCI state #10 of the candidate cell 1, for example, renumber the TCI state #1 to the TCI state #10 of the candidate cell 1 to a TCI state #11 to a TCI state #20, and configure the renumbered TCI states of the candidate cell 1 in a beam configuration related to the source cell. After making the switch decision, the first DU instructs the terminal device to switch to the beam direction (for example, the TCI state #11) of the candidate cell 1. If in step 1003, the CU configures the TCI states of the candidate cells in the configuration related to the serving cell (the source cell), the first DU indicates information about the TCI state #11 to the CU, and the CU further renumbers the TCI state #11 to the TCI state #1 of the candidate cell, and indicates information about the TCI state #1 to the second DU. If in step 1003, the first DU configures the TCI states of the candidate cells in the configuration related to the serving cell (the source cell), the first DU indicates, to the CU, the TCI state #1 corresponding to the TCI state #11, and the CU further indicates the information about the TCI state #1 to the second DU. In another possible manner, if the first DU indicates the beam direction by indicating a reference signal, and the CU or the first DU converts a measurement reference signal ID of the candidate cell into a reference signal ID of the source cell, the first DU, the CU, and the second DU exchange content of the reference signal ID. The CU or the first DU also needs to perform renumbering similar to the case in which the CU or the first DU renumbers the TCI state. Details are not described herein again.

1009: The CU sends a second switch decision result to the second DU based on the first switch decision result.

The second switch decision result indicates that the terminal device is to switch to the target cell and indicate the first beam direction that is to be used when the target cell communicates with the terminal device. The second switch decision result may include the target beam information and the identifier of the target cell, and the target beam information indicates the first beam direction that is to be used when the target cell communicates with the terminal device. The target beam information may be the identifier of the first beam direction, for example, the TCI state #1 or the CSI-RS #1.

In a possible implementation, the second switch decision result is the same as the first switch decision result. Step 1009 may be considered as that the CU forwards the received first switch decision result to the second DU. Alternatively, step 1008 and step 1009 may be considered as that the first DU sends the first switch decision result to the second DU through the CU.

In a possible implementation, the first switch decision result includes indication information 3, and the indication information 3 indicates a TCI state, with a first number, of the target cell, for example, the TCI state #11; and the second switch decision result includes indication information 4, and the indication information 4 indicates a TCI state, with a second number, of the target cell, for example, the TCI state #1. A possible implementation of step 1008 is as follows: The first DU sends the first switch decision result to the CU based on a TCI state configuration of a target cell in a serving cell currently accessed by the terminal device, where the first switch decision result includes the indication information 3, the indication information 3 indicates the TCI state, with the first number, of the target cell, and the TCI state with the first number corresponds to the first beam direction. A possible implementation of step 1009 is as follows: The CU numbers, based on the indication information 3, the TCI state, with the first number, of the target cell, to the TCI state number, with the second number, of the target cell, where a beam direction corresponding to the TCI state, with the second number, of the target cell is the first beam direction, and the first number is different from the second number. The CU sends the second switch decision result to the second DU, where the second switch decision result includes the indication information 4, and the second indication information indicates the TCI state, with the second number, of the target cell. For example, the CU numbers a TCI state #11 of the serving cell currently accessed by the terminal device to a TCI state #1 of the target cell. In this implementation, the beam direction of the target cell may be accurately indicated. Optionally, before performing step 1009, the CU performs the following operations: The CU numbers the TCI state, with the second number, of the target cell to the TCI state with the first number, and configures the TCI state, with the first number, of the target cell in a configuration of the serving cell currently accessed by the terminal device. For example, before performing step 1002, the CU numbers, based on the first message, the TCI state, with the second number, of the target cell to the TCI state with the first number, and configures the TCI state, with the first number, of the target cell in the configuration of the serving cell currently accessed by the terminal device.

1010: The second DU or the target cell performs uplink or downlink scheduling on the terminal device.

A possible implementation of step 1010 is as follows: sending uplink scheduling information or downlink scheduling information to the terminal device based on the first beam direction. Step 1010 is optional. For example, if the second DU knows that the target cell does not provide a pre-configured uplink grant in a pre-configuration phase, the second DU actively initiates the uplink scheduling to the terminal device based on the first beam direction.

Because the second DU learns, by performing step 1008 and step 1009, that the first DU has determined to switch the terminal device to the target cell/second DU, the target cell/target DU may actively perform the uplink or downlink scheduling on the terminal device. This case is referred to as a case 3. The following describes the case 3.

The second DU sends the uplink or downlink scheduling to the terminal device on a resource that is of the target cell and that is learned of in step 1009, for example, sends a PDCCH message to perform the uplink or downlink scheduling. Further, the second DU sends the PDCCH message by using the target beam information learned of in step 1009, for example, sends the PDCCH message in the first beam direction indicated by using the target beam information.

The case 3 may be used in combination with the technology of the case 1 in step 803. For example, if the second DU knows that the target cell provides the pre-configured uplink grant in the pre-configuration phase, the second DU does not actively initiate uplink scheduling to the terminal device, and attempts, in only the beam direction learned of in step 1009, to receive an uplink message actively sent by the terminal device. In this case, there may be no correspondence between the pre-configured uplink grant and the beam direction. The terminal device may send an uplink message by using any available uplink grant in the first beam direction indicated in the switch command (for example, send an uplink message in a beam direction corresponding to a TCI state indicated in the switch command). Because the second DU also learns of the beam direction, namely, the first beam direction, in step 1009, the second DU receives the message in the beam direction.

The case 3 may be used in combination with the technologies in the case 1 and the case 2. For example, when the terminal device is to send an uplink message (for example, a C-RNTI MAC CE), but finds that there is no available uplink grant, the terminal device triggers an SR process, and needs to send an SR on a PUCCH resource. In this case, a timer may be started to delay sending the SR on the PUCCH resource. After the timer expires, the terminal device sends the SR on the PUCCH resource. A reason is that the terminal device may actively wait, within a period of time, for the second DU to initiate the uplink scheduling. If the scheduling is not initiated by the second DU after the period of time, in other words, after the timer expires, the terminal device sends the SR on the PUCCH resource. If the uplink scheduling initiated by the second DU is received before the timer expires, the message is sent based on the uplink scheduling. In this manner, a correspondence between a PUCCH resource and a beam direction does not need to be pre-configured. The terminal device may send the SR on any available PUCCH resource in the beam direction indicated in the switch command. In this case, because the second DU also learns of the beam direction, namely, the first beam direction, in step 1009, the second DU can also receive the PUCCH message in the preferred direction. A function of the timer is preventing the terminal device from sending the PUCCH too early. If the PUCCH is sent too early, the second DU may not learn of the target beam information in step 1009, and may not receive, in an accurate beam direction, the PUCCH message sent by the terminal device. It should be understood that the manner of the timer is also applicable to a scenario in which the case 3 is combined with the case 1.

1011: The terminal device sends an uplink message to the second DU.

Optionally, the terminal device sends the uplink message to the second DU based on TA information of the target cell in the first beam direction indicated in the switch command. The uplink message indicates that the terminal device is accessing the target cell. Alternatively, the uplink message indicates that the terminal device successfully accesses the target cell.

If the manner in the case 1 or the manner in the case 2 is used, the terminal device sends the uplink message in a manner that is similar to the manner in FIG. 9. Step 1010 and step 1011 may be replaced with step 908 in FIG. 9. In other words, the case 1 (the uplink grant is pre-configured) and the case 2 (the terminal device sends the SR) in step 908 in the method procedure in FIG. 9 are also applicable to the method procedure in FIG. 10. Step 1010 and step 1011 may be replaced with the following: The terminal device sends, by using any available uplink grant, an uplink message to the second DU by using the first beam direction and the TA information of the target cell that are indicated in the switch command, where the uplink message indicates that the terminal device is accessing the target cell. The uplink message does not need to indicate, to the second DU or the target cell, the first beam direction that is to be used for communication with the terminal device. Step 1010 and step 1011 may be replaced with the following: The terminal device sends, on any available PUCCH resource, an SR to the second DU by using the beam direction and the TA information of the target cell that are indicated in the switch command; and sends an uplink message based on an uplink grant allocated by the second DU for the SR, where the uplink message indicates that the terminal device successfully accesses the target cell.

If the manner in the case 3 is used, when the second DU sends one piece of uplink scheduling information in step 1010, the terminal device sends an uplink message, where the uplink message may indicate that the terminal device successfully accesses the target cell.

If the manner in the case 3 is used, when the target DU sends one piece of downlink scheduling information in step 1010, the terminal device needs to feed back an ACK/NACK after receiving a downlink message, where the fed-back ACK/NACK may be used as the uplink message in step 1011, and may indicate that the terminal device successfully accesses the target cell.

In the method procedure in FIG. 10, the first DU notifies, through the CU, the second DU or the target cell of the beam direction that needs to be used for communication with the terminal device. When sending an uplink message to the second DU, the terminal device does not need to pre-configure a correspondence between an uplink grant or a PUCCH and a beam direction. After the terminal device switches to the target cell in a RACH-less manner, the terminal device may send an uplink message more flexibly on uplink resources. If these uplink resources are not configured, the second DU may actively initiate scheduling, so that reserved uplink pre-configuration resources can be saved.

In this embodiment of this application, the first DU notifies, through the CU, the target DU of a result obtained through the switch decision, and the first DU notifies the terminal device of the identifier of the target cell and the identifier of the first beam direction by using the switch command, so that a process of beam alignment between the terminal device and the target cell after the RACH-less switching can be completed. The terminal device learns of the TA information of the target cell from the first information or the switch command, and completes uplink synchronization without needing to perform RACH, so that the RACH-less cell switching in the CU-DU separation architecture can be implemented. In this way, the switching interruption duration is reduced.

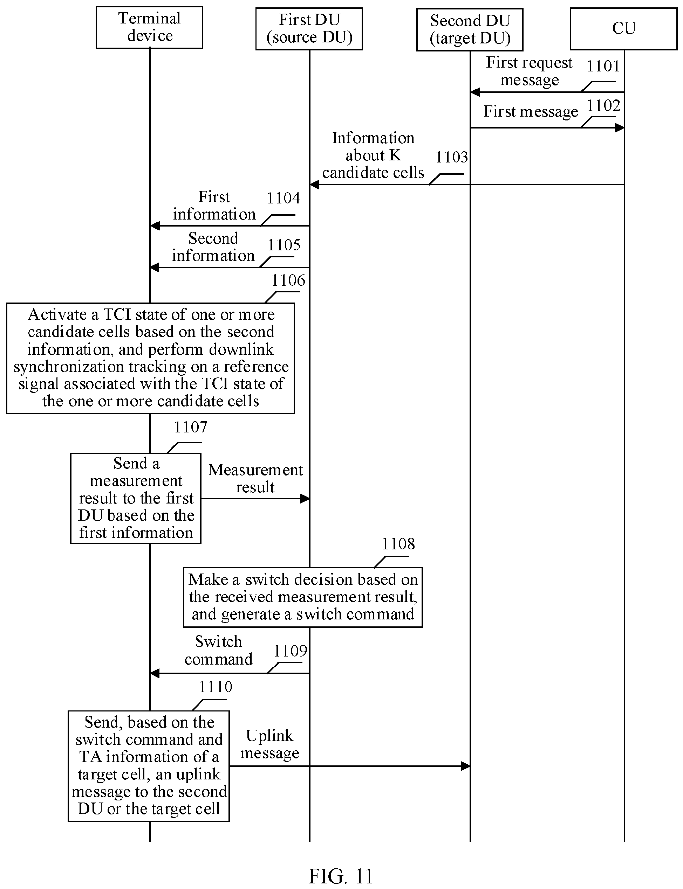

FIG. 11 is an interaction flowchart of another cell switching method according to an embodiment of this application. In an interaction procedure of the method in FIG. 11, before receiving a switch command from a first DU, a terminal device activates a TCI state of one or more candidate cells, and performs downlink synchronization tracking on a reference signal associated with the TCI state of the candidate cell, to complete a downlink synchronization process of a target cell more quickly, and complete switching to the target cell. As shown in FIG. 11, the method includes the following steps.

1101: A CU sends a first request message to a second DU.

For step 1101, refer to step 901.

1102: The second DU sends a first message to the CU based on the first request message.

For step 1102, refer to step 902.

1103: The CU sends information about K candidate cells to the first DU.

For step 1103, refer to step 903.

1104: The first DU sends first information to the terminal device.

For step 1104, refer to step 904.

1105: The first DU sends second information to the terminal device.

The second information is used to activate a TCI state of one or more candidate cells, and the one or more candidate cells belong to the K candidate cells. In this embodiment of this application, only a sequence in which step 1105 is performed before step 1109 is limited. A sequence of step 1105 and step 1107 is not limited, and a sequence of step 1105 and step 1104 is not limited either.

In a possible implementation, before receiving the second information from the first DU, the terminal device sends capability indication information to the first DU, where the capability indication information indicates a maximum quantity of transmission configuration indicator states that can be simultaneously activated by the terminal device. Step 1105 may be as follows: The first DU sends the second information to the terminal device based on the capability indication information sent by the terminal device.

In a possible implementation, the first information and the second information are carried in one message. In this implementation, the first DU sends, to the terminal device, a message that carries the first information and the second information. In other words, the first DU may separately send the first information and the second information, or may send the first information and the second information together to the terminal device.

1106: The terminal device activates the TCI state of the one or more candidate cells based on the second information, and performs downlink synchronization tracking on a reference signal associated with the TCI state of the one or more candidate cells.

For example, the second information is carried in a MAC CE. It should be understood that a quantity of reference signals on which the terminal device can simultaneously perform downlink synchronization tracking/a quantity of TCI states that can be activated is limited by a capability of the terminal device. The terminal device sends the capability to a network device (the first DU or the CU). The first DU determines a quantity of activated TCI states of the candidate cell based on the capability of the terminal device. Because a source cell also has an activated TCI state, in the first information sent by the first DU, a sum of the activated quantity of TCI states of the candidate cell and a quantity of TCI states that is of the source cell and that is previously activated by the terminal device should not exceed the capability of the terminal device. When a TCI state of the target cell indicated in the switch command subsequently sent by the first DU has been activated by using the second information, the terminal device has previously performed downlink synchronization tracking on a reference signal corresponding to the TCI state. Therefore, the terminal device can more quickly complete the downlink synchronization process of the target cell, and complete the switching to the target cell.

1107: The terminal device sends a measurement result to the first DU based on the first information.

For step 1107, refer to step 702.

1108: The first DU makes a switch decision based on the received measurement result, and generates the switch command.

For step 1108, refer to step 703.

1109: The first DU sends the switch command to the terminal device.

For step 1109, refer to step 704. The switch command may include an identifier of a first beam direction and an identifier of the target cell. For example, the identifier of the first beam direction is a TCI state 1 or a CSI-RS #1.

1110: The terminal device sends an uplink message to the second DU or the target cell based on the switch command and TA information of the target cell.

For step 1110, refer to step 602.

Step 1110 may be replaced with step 1008 to step 1011 in FIG. 10.

In this embodiment of this application, before receiving the switch command from the first DU, the terminal device activates the TCI state of the one or more candidate cells, and performs the downlink synchronization tracking on the reference signal associated with the TCI state of the candidate cell, to complete the downlink synchronization process of the target cell more quickly, and complete the switching to the target cell.

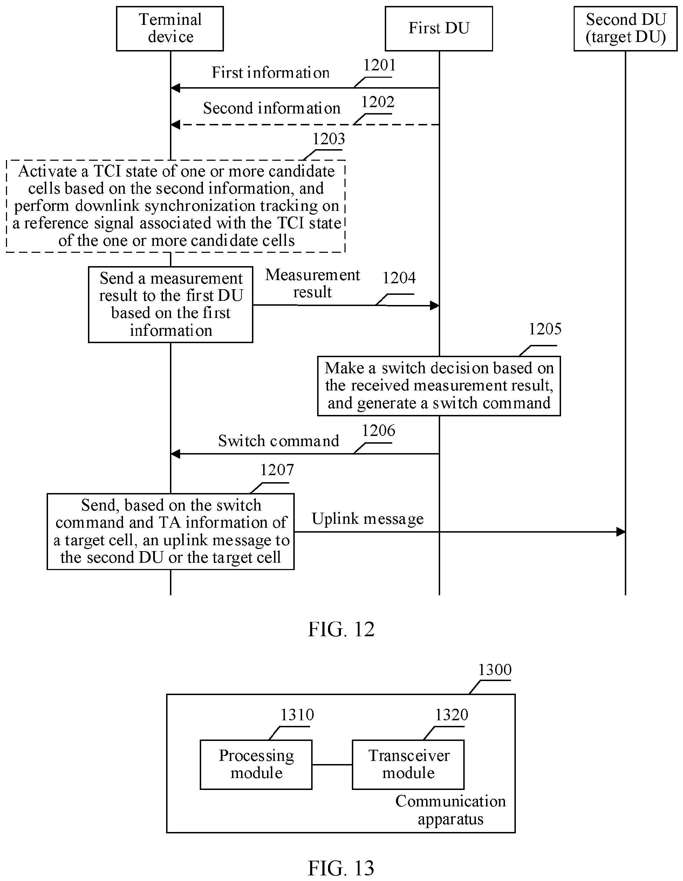

Application of the cell switching solution provided in this application to an inter-DU cell switching scenario is described in the procedures of the methods in FIG. 7 to FIG. 11. It should be understood that the cell method provided in this application is also applicable to an intra-DU cell switching scenario. For example, an information exchange process between the first DU and the target DU in the inter-DU cell switching scenario may be understood as information processing in a network device during intra-DU cell switching. A procedure of a method in FIG. 12 is an example in which the cell switching solution provided in this application is applied to the intra-DU cell switching scenario. With reference to the accompanying drawings, the following describes the application of the cell switching solution provided in this application to the intra-DU cell switching scenario.

FIG. 12 is an interaction flowchart of another cell switching method according to an embodiment of this application. An interaction procedure of the method in FIG. 12 is a RACH-less cell switching procedure in an intra-DU scenario. As shown in FIG. 12, the method includes the following steps.

1201: A first DU sends first information to a terminal device.

For step 1201, refer to step 801.

1202: The first DU sends second information to the terminal device.

For step 1202, refer to step 1105. Step 1202 is optional.

1203: The terminal device activates a TCI state of one or more candidate cells based on the second information, and performs downlink synchronization tracking on a reference signal associated with the TCI state of the one or more candidate cells.

For step 1203, refer to step 1106. Step 1203 is optional.

1204: The terminal device sends a measurement result to the first DU based on the first information.

For step 1204, refer to step 802.

1205: The first DU makes a switch decision based on the received measurement result, and generates a switch command.

For step 1205, refer to step 803.

1206: The first DU sends the switch command to the terminal device.

For step 1206, refer to step 804.

1207: The terminal device sends an uplink message to a second DU or a target cell based on the switch command and TA information of the target cell.

For step 1207, refer to step 805.

Step 1207 may be replaced with the following: The first DU or the target cell performs uplink scheduling on the terminal device; and the terminal device sends an uplink message to the first DU in a first beam direction indicated in the switch command. Because the first DU makes the switch decision based on the received measurement result, and generates the switch command, the first DU knows a beam direction, namely, the first beam direction, that needs to be used for communication with the terminal device.

In this embodiment of this application, the terminal device sends the uplink message to the second DU or the target cell based on the switch command and the TA information of the target cell, to implement RACH-less cell switching, reduce switching interruption duration, quickly complete beam alignment with the target cell, and improve communication reliability and a capacity.

The cell switching method provided in embodiments of this application is described above. The following describes, with reference to the accompanying drawings, structures of communication apparatuses that can implement the cell switching method provided in embodiments of this application.

FIG. 13 is a diagram of a structure of a communication apparatus 1300 according to an embodiment of this application. The communication apparatus 1300 may implement functions or steps implemented by the terminal device in the foregoing method embodiments, may implement functions or steps implemented by the first DU in the foregoing method embodiments, may implement functions or steps implemented by the second DU in the foregoing method embodiments, or may implement functions or steps implemented by the CU in the foregoing method embodiments. The communication apparatus may include a processing module 1310 and a transceiver module 1320. Optionally, the communication apparatus may further include a storage unit. The storage unit may be configured to store instructions (code or a program) and/or data. The processing module 1310 and the transceiver module 1320 may be coupled to the storage unit. For example, the processing module 1310 may read the instructions (the code or the program) and/or the data in the storage unit, to implement a corresponding method. The foregoing units may be disposed independently, or may be partially or completely integrated. For example, the transceiver module 1320 may include a sending module and a receiving module. The sending module may be a transmitter, and the receiving module may be a receiver. An entity corresponding to the transceiver module 1320 may be a transceiver, or may be a communication interface.

In some possible implementations, the communication apparatus 1300 can accordingly implement the behavior and the function of the terminal device in the foregoing method embodiments. For example, the communication apparatus 1300 may be a terminal device, or may be a component (for example, a chip or a circuit) used in the terminal device. The transceiver module 1320 may be, for example, configured to perform all receiving or sending operations performed by the terminal device in the embodiments in FIG. 6 to FIG. 12. The processing module 1310 is configured to perform all operations performed by the terminal device in the embodiments in FIG. 6 to FIG. 12 except the sending and receiving operations.

In some possible implementations, the communication apparatus 1300 can accordingly implement the behavior and the function of the first DU in the method embodiments. For example, the communication apparatus 1300 may be a first DU, or may be a component (for example, a chip or a circuit) used in the first DU. The transceiver module 1320 may be, for example, configured to perform all receiving or sending operations performed by the first DU in the embodiments in FIG. 6 to FIG. 12. The processing module 1310 is configured to perform all operations performed by the first DU except the sending and receiving operations.

In some possible implementations, the communication apparatus 1300 can accordingly implement the behavior and the function of the second DU in the foregoing method embodiments. For example, the communication apparatus 1300 may be a second DU, or may be a component (for example, a chip or a circuit) used in the second DU. The transceiver module 1320 may be, for example, configured to perform all receiving or sending operations performed by the second DU in the embodiments in FIG. 6 to FIG. 12. The processing module 1310 is all operations performed by the second DU in the embodiments of FIG. 6 to FIG. 12 except the sending and receiving operations.

In some possible implementations, the communication apparatus 1300 can accordingly implement the behavior and the function of the CU in the foregoing method embodiments. For example, the communication apparatus 1300 may be a CU, or may be a component (for example, a chip or a circuit) used in the CU. The transceiver module 1320 may be, for example, configured to perform all receiving or sending operations performed by the CU in the embodiments in FIG. 9 to FIG. 11. The processing module 1310 may be, for example, configured to perform all operations performed by the CU in the embodiments in FIG. 9 to FIG. 11 except the sending and receiving operations.

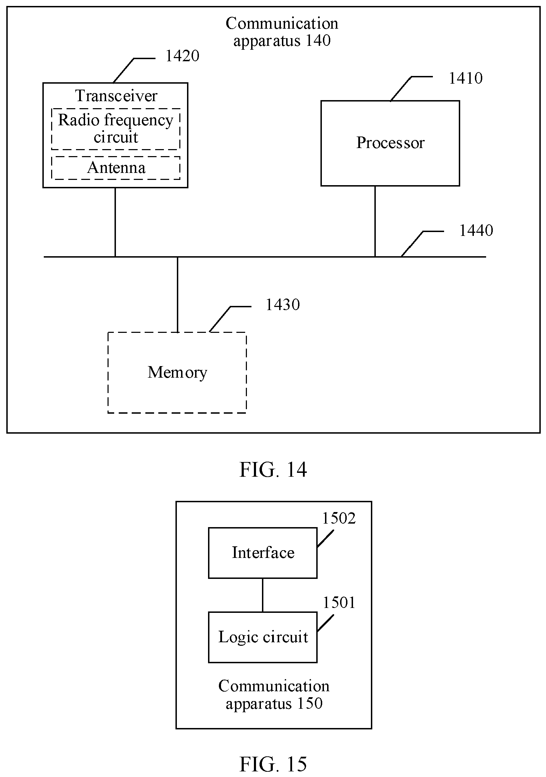

FIG. 14 is a diagram of a structure of another communication apparatus 140 according to an embodiment of this application. The communication apparatus in FIG. 14 may be the foregoing terminal device, the foregoing first DU, the foregoing second DU, or the foregoing CU.

As shown in FIG. 14, the communication apparatus 140 includes at least one processor 1410 and a transceiver 1420.

In some embodiments of this application, the processor 1410 and the transceiver 1420 may be configured to perform the function, the operation, or the like performed by the terminal device. The transceiver 1420 performs, for example, all receiving or sending operations performed by the terminal device in the embodiments in FIG. 6 to FIG. 12. The processor 1410 is, for example, configured to perform all operations performed by the terminal device in the embodiments in FIG. 6 to FIG. 12 except the sending and receiving operations.

In some embodiments of this application, the processor 1410 and the transceiver 1420 may be configured to perform the function, the operation, or the like performed by the first DU. The transceiver 1420 performs, for example, all receiving or sending operations performed by the first DU in the embodiments in FIG. 6 to FIG. 12. The processor 1410 is, for example, configured to perform all operations performed by the first DU in the embodiments in FIG. 6 to FIG. 12 except the sending and receiving operations.

In some embodiments of this application, the processor 1410 and the transceiver 1420 may be configured to perform the function, the operation, or the like performed by the second DU. The transceiver 1420 performs, for example, all receiving or sending operations performed by the second DU in the embodiments in FIG. 6 to FIG. 12. The processor 1410 is, for example, configured to perform all operations performed by the second DU in the embodiments in FIG. 6 to FIG. 12 except the sending and receiving operations.

In some embodiments of this application, the processor 1410 and the transceiver 1420 may be configured to perform the function, the operation, or the like performed by the CU. The transceiver 1420 performs, for example, all receiving or sending operations performed by the CU in the embodiments in FIG. 9 to FIG. 11. The processor 1410 is, for example, configured to perform all operations performed by the CU in the embodiments in FIG. 9 to FIG. 11 except the sending and receiving operations.

The transceiver 1420 is configured to communicate with another device/apparatus through a transmission medium. The processor 1410 receives and sends data and/or signaling through the transceiver 1420, and is configured to implement the method in the foregoing method embodiments. The processor 1410 may implement the function of the processing module 1310, and the transceiver 1420 may implement the function of the transceiver module 1320.

Optionally, the transceiver 1420 may include a radio frequency circuit and an antenna. The radio frequency circuit is mainly configured to perform conversion between a baseband signal and a radio frequency signal, and process the radio frequency signal. The antenna is mainly configured to receive and send a radio frequency signal in a form of an electromagnetic wave. An input/output apparatus, such as a touchscreen, a display, or a keyboard, is mainly configured to: receive data input by a user and output data to the user.

Optionally, the communication apparatus 140 may further include at least one memory 1430, configured to store program instructions and/or data. The memory 1430 is coupled to the processor 1410. The coupling in embodiments of this application may be indirect coupling or a communication connection between apparatuses, units, or modules in an electrical form, a mechanical form, or another form, and is used for information exchanging between the apparatuses, the units, or the modules. The processor 1410 may perform an operation with the memory 1430 cooperatively. The processor 1410 may execute the program instructions stored in the memory 1430. At least one of the at least one memory may be included in the processor.

The processor 1410 may read a software program in the memory 1430, interpret and execute instructions of the software program, and process data of the software program. When data needs to be sent in a wireless manner, the processor 1410 performs baseband processing on the to-be-sent data, and then outputs a baseband signal to the radio frequency circuit. The radio frequency circuit performs radio frequency processing on the baseband signal, and then sends, through the antenna, a radio frequency signal in an electromagnetic wave form. When data is sent to the communication apparatus, the radio frequency circuit receives a radio frequency signal through the antenna, converts the radio frequency signal into a baseband signal, and outputs the baseband signal to the processor 1410. The processor 1410 converts the baseband signal into data and processes the data.

In another implementation, the radio frequency circuit and the antenna may be disposed independent of the processor that performs baseband processing. For example, in a distributed scenario, the radio frequency circuit and the antenna may be remotely disposed independent of the communication apparatus.

A specific connection medium between the transceiver 1420, the processor 1410, and the memory 1430 is not limited in this embodiment of this application. In this embodiment of this application, the memory 1430, the processor 1410, and the transceiver 1420 are connected through a bus 1440 in FIG. 14. The bus is represented by using a thick line in FIG. 14. A connection manner between other components is merely an example for description, and is not limited thereto. The bus may be classified into an address bus, a data bus, a control bus, and the like. For ease of indication, only one thick line represents the bus in FIG. 14, but this does not mean that there is only one bus or only one type of bus.

In embodiments of this application, the processor may be a general-purpose processor, a digital signal processor, an application-specific integrated circuit, a field programmable gate array or another programmable logic device, a discrete gate or transistor logic device, or a discrete hardware component, and may implement or execute the methods, steps, and logical block diagrams disclosed in embodiments of this application. The general-purpose processor may be a microprocessor or any conventional processor or the like. The steps of the method disclosed with reference to embodiments of this application may be directly performed by a hardware processor, or may be performed by using a combination of hardware in the processor and a software module.

FIG. 15 is a diagram of a structure of another communication apparatus 150 according to an embodiment of this application. As shown in FIG. 15, the communication apparatus shown in FIG. 15 includes a logic circuit 1501 and an interface 1502. The processing module 1310 in FIG. 15 may be implemented by using the logic circuit 1501, and the transceiver module 1320 in FIG. 15 may be implemented by using the interface 1502. The logic circuit 1501 may be a chip, a processing circuit, an integrated circuit, a system-on-chip (system-on-chip, SoC), or the like, and the interface 1502 may be a communication interface, an input/output interface, or the like. In embodiments of this application, the logic circuit and the interface may alternatively be coupled to each other. A specific connection manner between the logic circuit and the interface is not limited in embodiments of this application.

In some embodiments of this application, the logic circuit and the interface may be configured to perform the function, the operation, or the like performed by the terminal device.

In some embodiments of this application, the logic circuit and the interface may be configured to perform the function, the operation, or the like performed by the first DU.

In some embodiments of this application, the logic circuit and the interface may be configured to perform the function, the operation, or the like performed by the second DU.

In some embodiments of this application, the logic circuit and the interface may be configured to perform the function, the operation, or the like performed by the CU.

This application further provides a computer-readable storage medium. The computer-readable storage medium stores a computer program or instructions. When the computer program is run or the instructions are run on a computer, the computer is enabled to perform the method in the foregoing embodiments. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like. The computer may be a general-purpose computer, a dedicated computer, a computer network, or another programmable apparatus.

It should be noted that a person of ordinary skill in the art may learn that all or some of the steps of the methods in the foregoing embodiments may be implemented by a program instructing relevant hardware. The program may be stored in a computer-readable storage medium. The computer-readable storage medium includes a read-only memory (read-only memory, ROM), a random access memory (random access memory, RAM), a programmable read-only memory (programmable read-only memory, PROM), an erasable programmable read-only memory (erasable programmable read-only memory, EPROM), a one-time programmable read-only memory (one-time programmable read-only memory, OTPROM), an electrically-erasable programmable read-only memory (Electrically-Erasable Programmable Read-Only Memory, EEPROM), a compact disc read-only memory (Compact Disc read-only memory, CD-ROM) or another optical disk memory, a magnetic disk memory, a magnetic tape memory, or any other medium that can be configured to carry or store data.

This application further provides a computer program product. The computer program product includes instructions or a computer program. When the instructions are run or the computer program is run on a computer, the method in the foregoing embodiments is performed. The computer program product includes one or more computer instructions. When the computer program instructions are loaded and executed on the computer, the procedure or functions according to embodiments of this application are all or partially generated.

All or some of the foregoing embodiments may be implemented by using software, hardware, firmware, or any combination thereof. When software is used to implement the embodiments, the embodiments may be all or partially implemented in a form of a computer program product.

This application further provides a communication system, including the terminal device, the first DU, and the second DU. Optionally, the foregoing CU is further included.

This application further provides a chip. The chip includes a processor and a communication interface. The processor reads, through the communication interface, instructions stored in a memory, to perform the method performed by any one of the terminal device, the first DU, the CU, or the second DU.

Essentially, a part that makes contributions to the conventional technology, or all or some of the technical solutions of this application may be embodied in a form of a software product. The computer program product is stored in a storage medium, and includes several instructions for enabling a device (which may be a terminal device, a network device, an in-vehicle device, a router, a server, a robot, a chip, a robot, or the like) to perform all or some of the steps of the method described in embodiments of this application.

## Claims

1. A cell switching method, applied to a terminal device, wherein the method comprises:
receiving a switch command from a first distributed unit DU, wherein the switch command instructs the terminal device to switch to a target cell and to communicate with the target cell in a first beam direction; and
sending, according to the switch command, an uplink message to a second DU that manages the target cell or the target cell on a second time-frequency resource corresponding to a second beam direction, wherein a periodicity of a time-frequency resource corresponding to the second beam direction is shorter than a periodicity of a time-frequency resource corresponding to the first beam direction.

2. The method according to claim 1, wherein the second time-frequency resource is a time-frequency resource corresponding to a first uplink grant corresponding to the second beam direction, and the first uplink grant is one of a plurality of periodic uplink grants of the target cell.

3. The method according to claim 1, wherein the second time-frequency resource is a physical uplink control channel PUCCH resource corresponding to the second beam direction, and the PUCCH resource corresponding to the second beam direction is one of a plurality of periodic PUCCH resources of the target cell.

4. The method according to any one of claims 1 to 3, wherein the uplink message comprises first indication information, and the first indication information indicates that the first beam direction is to be used for communication with the terminal device.

5. The method according to claim 1 or 3, wherein the sending, according to the switch command, an uplink message to a second DU that manages the target cell or the target cell on a second time-frequency resource corresponding to a second beam direction comprises:
triggering a scheduling request process when the terminal device has no uplink grant used to send identity information of the terminal device; and
sending, according to the switch command, a scheduling request to the second DU that manages the target cell or the target cell on the second time-frequency resource, wherein the scheduling request is used to request an uplink grant, and the scheduling request is comprised in the uplink message.

6. The method according to claim 5, wherein the sending, according to the switch command, a scheduling request to the second DU that manages the target cell or the target cell on the second time-frequency resource comprises:
when no uplink grant from the second DU is received within preset duration after the switch command is received, sending, on the second time-frequency resource, the scheduling request to the second DU that manages the target cell or the target cell.

7. The method according to claim 6, wherein that no uplink grant from the second DU is received within preset duration after the switch command is received comprises: no uplink grant from the second DU is received before a timer expires, wherein a start time point of the timer is a time point at which the scheduling request process is triggered.

8. The method according to any one of claims 5 to 7, wherein after the sending, on the second time-frequency resource, the scheduling request to the second DU that manages the target cell or the target cell, the method further comprises:
receiving grant information that is sent by the second DU for the scheduling request, wherein the grant information indicates a second uplink grant available to the terminal device; and
sending second indication information to the second DU or the target cell based on the second uplink grant, wherein the second indication information indicates that the first beam direction is to be used for communication with the terminal device.

9. The method according to any one of claims 1 to 8, wherein the first beam direction corresponds to a channel state information reference signal CSI-RS, the second beam direction corresponds to a synchronization signal and physical broadcast channel block SSB, and the CSI-RS corresponding to the first beam direction is one of a plurality of CSI-RSs associated with the SSB corresponding to the second beam direction.

10. The method according to any one of claims 1 to 9, wherein the sending, according to the switch command, an uplink message to a second DU that manages the target cell or the target cell on a second time-frequency resource corresponding to a second beam direction comprises:
determining, according to the switch command, the second beam direction corresponding to the first beam direction; and
sending the uplink message to the second DU that manages the target cell or the target cell on the second time-frequency resource corresponding to the second beam direction.

11. The method according to any one of claims 1 to 10, wherein the method further comprises:
receiving configuration information of a plurality of candidate cells from the first DU, wherein the configuration information of the plurality of candidate cells comprises timing advance TA information of one or more candidate cells; and
obtaining TA information of the target cell based on the switch command and the configuration information of the plurality of candidate cells, wherein the target cell is comprised in the plurality of candidate cells; and
the sending, according to the switch command, an uplink message to a second DU that manages the target cell or the target cell on a second time-frequency resource corresponding to a second beam direction comprises:
sending, based on the switch command and the TA information of the target cell, the uplink message to the second DU that manages the target cell or the target cell on the second time-frequency resource corresponding to the second beam direction.

12. The method according to any one of claims 1 to 10, wherein the switch command comprises TA information of the target cell; and
the sending, according to the switch command, an uplink message to a second DU that manages the target cell or the target cell on a second time-frequency resource corresponding to a second beam direction comprises:
sending, based on the switch command and the TA information of the target cell, the uplink message to the second DU that manages the target cell or the target cell on the second time-frequency resource corresponding to the second beam direction.

13. The method according to any one of claims 1 to 12, wherein before the receiving a switch command from a first distributed unit DU, the method further comprises:
sending capability indication information to the first DU, wherein the capability indication information indicates a maximum quantity of transmission configuration indicator states that can be simultaneously activated by the terminal device;
receiving second information from the first DU;
activating a transmission configuration indicator state of one or more candidate cells based on the second information, wherein the one or more candidate cells comprise the target cell; and
performing downlink synchronization tracking on a reference signal associated with the transmission configuration indicator state of the one or more candidate cells.

14. The method according to any one of claims 1 to 13, wherein the switch command comprises a first reference signal identifier, and the method further comprises:
after the terminal device switches to the target cell, communicating with the target cell in the first beam direction corresponding to the first reference signal identifier.

15. A cell switching method, applied to a second DU, wherein the method comprises:
receiving an uplink message sent by a terminal device on a second time-frequency resource corresponding to a second beam direction, wherein the uplink message indicates that the terminal device is accessing a target cell managed by the second DU, a periodicity of a time-frequency resource corresponding to the second beam direction is shorter than a periodicity of a time-frequency resource corresponding to a first beam direction, and the first beam direction is a beam direction that is to be used when the terminal device communicates with the target cell; and
enabling, based on the uplink message, the terminal device to access the target cell.

16. The method according to claim 15, wherein the second time-frequency resource is a time-frequency resource corresponding to a first uplink grant corresponding to the second beam direction, and the first uplink grant is one of a plurality of periodic uplink grants of the target cell.

17. The method according to claim 15, wherein the second time-frequency resource is a PUCCH resource corresponding to the second beam direction, and the PUCCH resource corresponding to the second beam direction is one of a plurality of periodic PUCCH resources of the target cell.

18. The method according to any one of claims 15 to 17, wherein the uplink message comprises first indication information, and the first indication information indicates that the first beam direction is to be used for communication with the terminal device.

19. The method according to claim 18, wherein the uplink message comprises a scheduling request and the first indication information, the first indication information indicates that the first beam direction is to be used for communication with the terminal device, and the scheduling request is used to request an uplink grant.

20. The method according to claim 15 or 17, wherein the uplink message comprises a scheduling request, and the scheduling request is used to request an uplink grant; and the method further comprises:
sending grant information for the scheduling request to the terminal device, wherein the grant information indicates a second uplink grant available to the terminal device; and
receiving second indication information that is sent by the terminal device by using the second uplink grant, wherein the second indication information indicates the first beam direction.

21. The method according to any one of claims 15 to 17, wherein before the enabling, based on the uplink message, the terminal device to access the target cell, the method further comprises:
receiving third indication information from a central unit CU, wherein the third indication information indicates the terminal device to access the target cell in the first beam direction.

22. The method according to any one of claims 15 to 21, wherein the first beam direction corresponds to a CSI-RS, the second beam direction corresponds to an SSB, and the CSI-RS corresponding to the first beam direction is one of a plurality of CSI-RSs associated with the SSB corresponding to the second beam direction.

23. A communication apparatus, comprising a module or a unit configured to implement the method according to any one of claims 1 to 14.

24. A communication apparatus, comprising a module or a unit configured to implement the method according to any one of claims 15 to 22.

25. A computer-readable storage medium, wherein the computer-readable storage medium stores a computer program; the computer program comprises program instructions; and when the program instructions are executed, a computer is enabled to perform the method according to any one of claims 1 to 14; or when the program instructions are executed, a computer is enabled to perform the method according to any one of claims 15 to 22.

26. A communication apparatus, comprising a processor, wherein the processor is configured to: when executing instructions, enable the communication apparatus to perform the method according to any one of claims 1 to 14, or enable the communication apparatus to perform the method according to any one of claims 15 to 22.

27. The apparatus according to claim 26, wherein the apparatus further comprises a memory, and the memory is configured to store the instructions.

28. A chip, wherein the chip comprises a processor and a communication interface, and the processor reads, through the communication interface, instructions stored in a memory, to perform the method according to any one of claims 1 to 14, or perform the method according to any one of claims 15 to 22.

29. A communication method, applied to a second distributed unit DU, wherein the method comprises:
receiving a first request message, wherein the first request message is a request message for requesting candidate cell information of a terminal device; and
sending a first message based on the first request message, wherein the first message comprises configuration information of K candidate cells of the terminal device and timing advance TA information of one or more candidate cells, and K is an integer greater than 0.

30. The method according to claim 29, wherein the TA information indicates a TA, indicates that a TA of the candidate cell is 0, indicates that a TA of the candidate cell is the same as a TA of a source cell, indicates that a TA of the candidate cell is the same as a TA of a cell in a source cell group, or indicates that a TA of the candidate cell is the same as a TA of a TA group in a source cell group, wherein the TA group is a cell group comprising one or more cells having the same TA.

31. The method according to claim 29 or 30, wherein the first request message indicates the second DU to provide information about the candidate cell, and the information about the candidate cell comprises configuration information of the candidate cell and TAinformation of the candidate cell.

32. The method according to claim 31, wherein the first request message is a terminal device context setup request message or a terminal device context modification request message.

33. The method according to any one of claims 29 to 32, wherein the configuration information of the candidate cell comprises at least one of the following: a beam direction configuration, a measurement reference signal configuration, or a configuration of a mapping relationship between a beam direction and a measurement reference signal.

34. The method according to any one of claims 29 to 33, wherein the first message is a terminal device context setup response message or a terminal device context modification response message.

35. A communication method, applied to a central unit CU, wherein the method comprises:
sending a first request message, wherein the first request message is a request message for requesting candidate cell information of a terminal device; and
receiving a first message, wherein the first message comprises configuration information of K candidate cells of the terminal device and timing advance TA information of one or more candidate cells, and K is an integer greater than 0.

36. The method according to claim 35, wherein the TA information indicates a TA, indicates that a TA of the candidate cell is 0, indicates that a TA of the candidate cell is the same as a TA of a source cell, indicates that a TA of the candidate cell is the same as a TA of a cell in a source cell group, or indicates that a TA of the candidate cell is the same as a TA of a TA group in a source cell group, wherein the TA group is a cell group comprising one or more cells having the same TA.

37. The method according to claim 35 or 36, wherein the first request message is a terminal device context setup request message or a terminal device context modification request message.

38. The method according to any one of claims 35 to 37, wherein the configuration information of the candidate cell comprises at least one of the following: a beam direction configuration, a measurement reference signal configuration, or a configuration of a mapping relationship between a beam direction and a measurement reference signal.

39. The method according to any one of claims 35 to 38, wherein the first message is a terminal device context setup response message or a terminal device context modification response message.

40. The method according to any one of claims 35 to 39, wherein the first request message indicates a second DU to provide information about the candidate cell, and the information about the candidate cell comprises configuration information of the candidate cell and TA information of the candidate cell.

41. The method according to any one of claims 35 to 40, wherein the method further comprises:
sending the configuration information of the K candidate cells and the TA information of the one or more candidate cells to a first DU, wherein the first DU is a DU currently serving the terminal device.

42. A communication method, applied to a first distributed unit DU, wherein the method comprises:
making a switch decision based on a received measurement result, and generating a switch command;
sending the switch command to a terminal device;
sending a first switch decision result to a central unit CU, wherein the first switch decision result notifies a second DU that the terminal device is to switch to a target cell, and notifies the second DU of a first beam direction that needs to be used when the target cell communicates with the terminal device.

43. The method according to claim 42, wherein the first switch decision result comprises target beam information and an identifier of the target cell, and the target beam information indicates the first beam direction that is to be used when the target cell communicates with the terminal device.

44. The method according to claim 43, wherein the target beam information comprises an identifier of the first beam direction, and the identifier of the first beam direction is a transmission configuration indicator TCI state identifier or a reference signal identifier.

45. A communication method, applied to a central unit CU, wherein the method comprises:
receiving a first switch decision result from a first distributed unit DU; and
sending a second switch decision result to a second DU based on the first switch decision result, wherein the second switch decision result indicates that a terminal device is to switch to a target cell and indicate a first beam direction that is to be used when the target cell communicates with the terminal device.

46. The method according to claim 45, wherein the second switch decision result comprises target beam information and an identifier of the target cell, and the target beam information indicates the first beam direction that is to be used when the target cell communicates with the terminal device.

47. The method according to claim 46, wherein the target beam information comprises an identifier of the first beam direction, and the identifier of the first beam direction is a transmission configuration indicator TCI state identifier or a reference signal identifier.

48. A communication method, applied to a second distributed unit DU, wherein the method comprises:
receiving a second switch decision result, wherein the second switch decision result indicates that a terminal device is to switch to a target cell and indicate a first beam direction that is to be used when the target cell communicates with the terminal device; and
sending uplink scheduling information or downlink scheduling information to the terminal device in the first beam direction; or receiving a message in the first beam direction.

49. The method according to claim 48, wherein the second switch decision result comprises target beam information and an identifier of the target cell, and the target beam information indicates the first beam direction that is to be used when the target cell communicates with the terminal device.

50. The method according to claim 49, wherein the target beam information comprises an identifier of the first beam direction, and the identifier of the first beam direction is a transmission configuration indicator TCI state identifier or a reference signal identifier.

51. A communication apparatus, comprising a module or a unit configured to implement the method according to any one of claims 29 to 50.

52. A computer-readable storage medium, wherein the computer-readable storage medium stores a computer program; the computer program comprises program instructions; and when the program instructions are executed, a computer is enabled to perform the method according to any one of claims 29 to 50.

53. A communication apparatus, comprising a processor, wherein the processor is configured to: when executing instructions, enable the communication apparatus to perform the method according to any one of claims 29 to 50.

54. The apparatus according to claim 53, wherein the apparatus further comprises a memory, and the memory is configured to store the instructions.

55. A chip, wherein the chip comprises a processor and a communication interface, and the processor reads, through the communication interface, instructions stored in a memory, to perform the method according to any one of claims 29 to 50.
